# EUROPEAN PATENT SPECIFICATION

(11) **EP 3 699 841 B1**
(45) Date of publication and mention of the grant of the patent: **21.06.2023**
(21) Application number: 20157925.7
(22) Date of filing: 18.02.2020
(51) Int. Cl.: G06Q 10/063, A61C 13/00

(54) **DENTAL PROCESSING MACHINE-OPERATING DEVICE, DENTAL PROCESSING MACHINE-OPERATING METHOD AND DENTAL PROCESSING MACHINE-OPERATING SYSTEM**
BETRIEBSVERFAHREN FÜR ZAHNBEARBEITUNGSMASCHINE, BETRIEBSVERFAHREN FÜR ZAHNBEARBEITUNGSMASCHINE UND BETRIEBSSYSTEM FÜR ZAHNBEARBEITUNGSMASCHINE
DISPOSITIF, PROCÉDÉ ET SYSTÈME DE FONCTIONNEMENT DE MACHINE DE TRAITEMENT DENTAIRE

(30) Priority: 20.02.2019 JP 2019028900
(43) Date of publication of application: 26.08.2020
(73) Proprietor: DGSHAPE Corporation, Hamamatsu-shi, Shizuoka 431-2103 (JP)
(72) Inventor: HANAJIMA, Masaki, Hamamatsu-shi, Shizuoka 431-2103 (JP); YOSHIOKA, Shiro, Hamamatsu-shi, Shizuoka 431-2103 (JP); OTAKA, Akira, Hamamatsu-shi, Shizuoka 431-2103 (JP); TANGE, Shota, Hamamatsu-shi, Shizuoka 431-2103 (JP)
(74) Representative: Grünecker Patent- und Rechtsanwälte PartG mbB

(56) References cited:
- EP-A2- 2 541 351
- WO-A2-2007/115927
- US-A1- 2016 291 585
- US-A1- 2017 156 828

## Description

### TECHNICAL FIELD

The present invention relates to a device and a method for operating a dental processing machine and a system for operating a dental processing machine.

### BACKGROUND ART

JP 2018-124862 A discloses a dental processing machine that operates according to a processing program (also referred to as NC data) to cut a workpiece into a desired shape.

US 2016/0291585 A1, which discloses the subject matter of the preambles of the independent claims, describes a management system for controlling dental processing machines. The control is based on predetermined workflows of processing steps. The management system creates a set of machine instructions that is stored at the management system and forwarded to, and stored at, a group controller of a group of dental mills.

WO 2017/115927 A3 describes general workflow management and, in particular, a customer-configurable workflow system for generating workflow models from configurable templates.

EP 2 541 351 A2 describes a numeric control for a machine-tool. In particular, a system for displaying a sequence of functional blocks to be executed is disclosed

US 2017/0156828 A1 describes a dental restoration manufacturing system and, in particular, processing ability of customized dental restorations in an automated process.

### CITATION LIST

### Patent Literature

[Patent Literature 1] JP 2018-124862 A
[Patent Literature 2]: US 2016/0291585 A1
[Patent Literature 3]: WO 2017/115923 A3
[Patent Literature 4]: EP 2 541 351 A2
[Patent Literature 5]: US 2017/0156828 A1

### SUMMARY OF INVENTION

### TECHNICAL PROBLEM

A dental processing machine is operated according to a processing program transmitted from an operating device. The operating device may be configured to send a plurality of processing programs successively to the dental processing machine so that the processing programs are executed by the dental processing machine in a certain order. The order in which the plurality of processing programs are to be executed by the dental processing machine is shared between the operating device and the dental processing machine. The order in which the plurality of processing programs are to be executed by the dental processing machine needs to be matched between the operating device and the dental processing machine. For this reason, a complicated operation is necessary to interpose another processing program between a plurality of processing programs for which the execution order has already been determined. It would be desirable to simplify the operation for interposing another processing program between a plurality of processing programs for which the execution order has already been determined.

### SOLUTION TO PROBLEM

This is achieved by the features of the independent claims. A dental processing machine-operating device proposed herein includes: a processing program storage unit for storing a plurality of processing programs each specifying a processing procedure performed by the dental processing machine; a first list storage unit for storing a job list in which the plurality of processing programs, each defining a processing procedure performed by the dental processing machine, are associated with an order in which the plurality of processing programs are to be executed; a first status recording unit for acquiring, from the dental processing machine, execution statuses of the plurality of processing programs contained in the job list, and recording the execution statuses of the plurality of processing programs; a first selecting unit for selecting at least one of the plurality of processing programs from among the processing programs that are stored in the processing program storage unit or the processing programs that are contained in the job list; and a first interposing process unit for interposing the at least one processing program selected by the first selecting unit into the job list next after one of the processing programs that is currently being executed by the dental processing machine.

In another embodiment, the operating device may further include a second interposing process unit for interposing the at least one processing program selected by the first selecting unit at an arbitrary position in the job list other than one of the processing programs that is currently being executed by the dental processing machine.

In another embodiment, a dental processing machine-operating system includes an operating device and a server data-communicably connected to the operating device.

The server may include a second list storage unit for storing the job list acquired from the operating device, and a second status management unit for acquiring execution statuses of a plurality of processing programs contained in the job list through the operating device and recording the execution statuses of the plurality of processing programs.

The dental processing machine-operating system may further include an external device data-communicably connected to the server.

The external device may include: a third list storage unit for storing the job list acquired through the server; a third status management unit for acquiring execution statuses of a plurality of processing programs contained in the job list through the server and recording the execution statuses of the plurality of processing programs; a second selecting unit for selecting at least one of the plurality of processing programs from among the processing programs that are stored in the processing program storage unit or the processing programs that are contained in the job list; and a third interposing process unit for interposing the at least one processing program selected by the second selecting unit into the job list next after one of the processing programs that is currently being executed by the dental processing machine.

In another embodiment, the external device may further include a fourth interposing process unit for interposing the at least one processing program selected by the second selecting unit at an arbitrary position in the job list other than one of the processing programs that is currently being executed by the dental processing machine.

### ADVANTAGEOUS EFFECTS OF INVENTION

Embodiments of the dental processing machine-operating device, the dental processing machine-operating method and the dental processing machine-operating system as described above enable the operating device and an external device to interpose a selected one of the processing programs into a predetermined position in a job list. Because an interposing process unit for executing such an interposing process is provided, it is easy to carry out an operation that is necessary to interpose another processing program between a plurality of processing programs for which the execution order has already been determined.

### BRIEF DESCRIPTION OF DRAWINGS

Fig. 1 is a view illustrating an example of the configuration of a dental processing machine-operating system according to the present disclosure.
Fig. 2 is a block diagram illustrating a configuration of a dental processing machine 1.
Fig. 3 is a view illustrating a data string of a processing program CP contained in a milling file 21a in this embodiment.
Fig. 4 is a view illustrating an example of a job list JL.
Fig. 5 is a view illustrating an example of a log file LF.
Fig. 6 shows an example of a code table used for recording event IDs.
Fig. 7 is a view illustrating an example of processing information data PD.
Fig. 8 is a view illustrating an example of data acquired from a comment line S1.
Fig. 9 shows an example of a job list JL displayed on a display of an operating device 11.
Fig. 10 shows an example of a job list JL displayed on a display of an operating device 11.

### DESCRIPTION OF EMBODIMENTS

Hereinbelow, a dental processing machine-operating device, a dental processing machine-operating method and a dental processing machine-operating system will be described in accordance with embodiments of the present invention. It should be noted, however, that the embodiments described herein are, of course, not intended to limit the present invention.

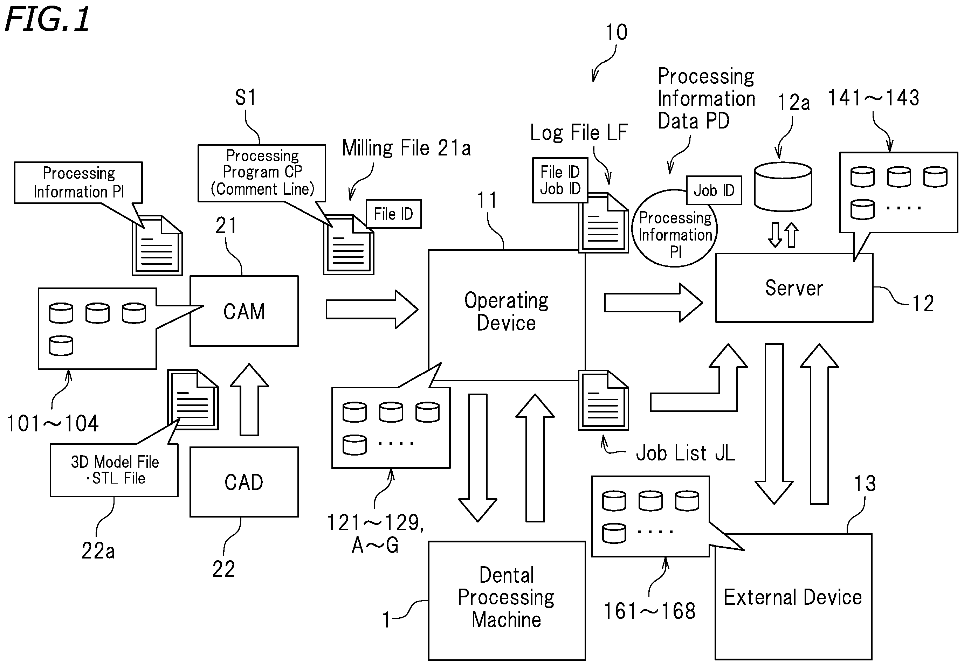

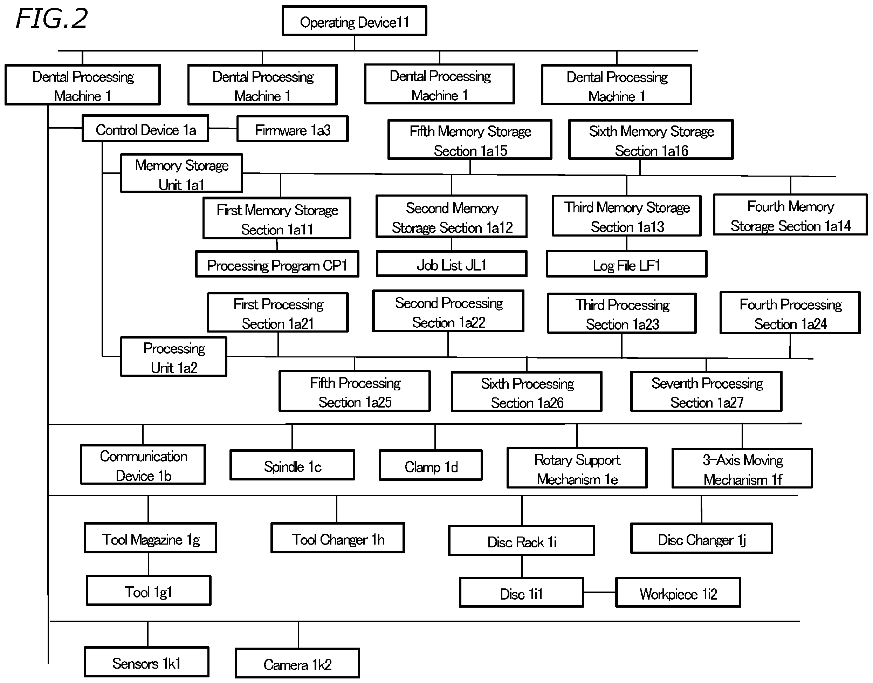

Fig. 1 is a view illustrating an example of the configuration of a dental processing machine-operating system according to the present disclosure. It should be noted, however, that, in order to facilitate understanding of the entire operating system, Fig. 1 also shows some devices that are not included in the operating system. Fig. 2 is a block diagram illustrating a configuration of a dental processing machine 1.

### Dental Processing Machine Operating System

As illustrated in Fig. 1, a dental processing machine-operating system 10 herein includes an operating device 11, a server 12, and an external device 13. Each of the operating device 11, the server 12, and the external device 13 may be implemented by, for example, a computer that is operated according to a predetermined program. Specifically, each of the operating device 11, the server 12, and the external device 13 includes an arithmetic device [also referred to as a processor, CPU (central processing unit), or MPU (micro-processing unit)] and a memory storage device (such as a memory and a hard disk), which performs various processing in cooperation with software. For example, each of the configurations and operations of the operating device 11, the server 12, and the external device 13 may be embodied as a database that stores various data embodied by a computer, a data structure, or a processing module that performs predetermined computing processes according to a predetermined program, or as part of the database, the data structure, or the processing module.

### Operating Device 11

The operating device 11 is a device for operating a dental processing machine 1. As illustrated in Fig. 2, the operating device 11 is data-communicably connected to a plurality of dental processing machines 1 and is configured to be able to operate the plurality of dental processing machines 1. The operating device 11 is configured to cooperate with firmware 1a3 incorporated in each of the dental processing machines 1 to control the dental processing machines 1. In this case, an identification number is assigned to each of the dental processing machines 1 to identify the dental processing machine 1 so that each of the dental processing machines 1 can be identified by the corresponding identification number. The operating device 11 communicates with the dental processing machines 1 at every predetermined time and obtains data related to the status of the dental processing machines 1 through the firmware 1a3, to monitor the status of the dental processing machines 1.

### Processing Program CP

The operating device 11 sends a processing program CP to a dental processing machine 1. The dental processing machine 1 executes the processing program CP through the firmware 1a3. The processing program CP is created by a CAM software-equipped device 21. The processing program CP may be created based on a 3D model file 22a that is created by a CAD software-equipped device 22. The 3D model file 22a is, for example, what is called an STL file produced in STL format. The 3D model file 22a records the shape of a product that is to be shaped by the dental processing machine 1. Each of the processing programs CP may be a data group for controlling the dental processing machine 1, and a milling file 21a that records a processing program CP may be what is called an NC program. The milling file 21a recording a processing program CP may be, for example, an NC file containing NC data. The processing programs CP are transferred from the CAM software-equipped device 21 to the operating device 11.

The CAM software is programmed to perform various settings about processing, such as selection of a prosthesis, selection of the type of material, and selection of the shape of the material (e.g., disc or block, the thickness of the disc, and the like) and also to generate a tool path. The CAM software-equipped device 21 retains data that are required in various settings related to the processing, such as selection of the prosthesis, selection of the type of the material, and selection of the shape of the material (e.g., disc or block, the thickness of the disc, and the like) that are necessary in the processing. These data include data of predetermined items concerning the materials or products to be processed by the processing programs. Processing information PI, which contains the data of predetermined items concerning the materials or products to be processed by the processing programs, may be prepared by the CAM software-equipped device 21 in advance, as illustrated in Fig. 1. These data may also be prepared by, for example, an operator who handles the CAM software-equipped device 21 in advance.

The CAM software-equipped device 21 may retain data of predetermined items concerning the materials or products to be processed by the processing programs. The data of predetermined items concerning the materials or products to be processed by the processing programs may either be stored in a memory storage area of the CAM software-equipped device 21, or be read out from an external storage device such as a USB memory stick or a hard disk drive (HDD).

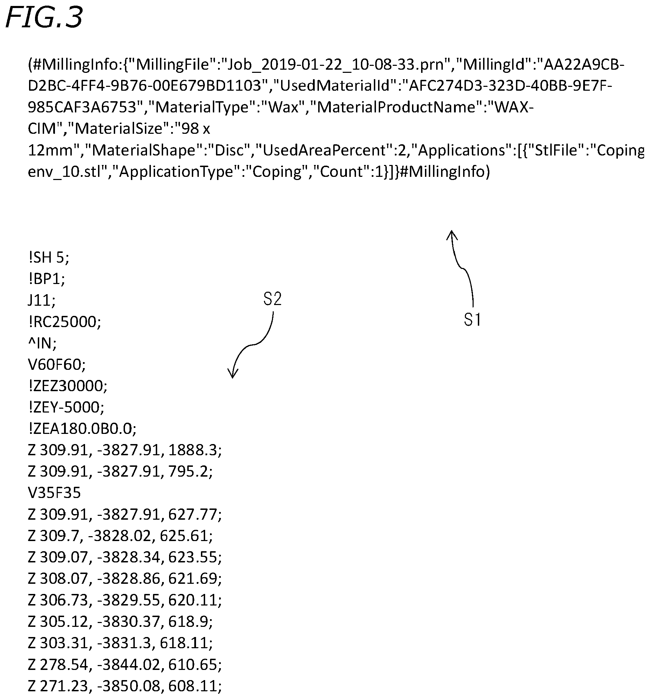

Fig. 3 is a view illustrating a data string of a processing program CP contained in a milling file 21a in this embodiment. The processing program CP shown in Fig. 3 is provided with a comment line S1, which is enclosed in brackets, at the first line. The comment line contains the file name of a milling file (Milling File Name) that records the processing program CP, a milling file ID (Milling File ID), and processing information PI. The milling file ID may also be referred to as "file ID" when appropriate. After the comment line S1, the processing program CP shown in Fig. 3 describes commands that specify the processing procedure carried out by the processing program CP.

Herein, the "comment line" is a line that is input in a processing program in a predetermined format, and it is a portion that is not read as a program by a compiler. The way of setting the comment line is defined by the programming language used for the processing program. It is possible that, for example, the "comment line" may contain a comment written by any combination of characters contained in a character set of the computer. Herein, CAM software is used to record the file name of a milling file (Milling File Name), a milling file ID (Milling File ID), and processing information PI into such a "comment line".

In this embodiment, data of predetermined items concerning the material or product to be processed by a processing program are recorded in the comment line of the processing program CP. When the processing program CP is executed by the dental processing machine 1, the data of predetermined items concerning the material or product to be processed, which are recorded in such a comment line, are ignored as a mere comment.

The data and the file IDs recorded in the comment line may be created by data of key-value pairs, each including a key and a value. In this case, the comment line may be written in a predetermined format by which the type and value of the data can be identified.

For example, for the predetermined items concerning the material or product to be processed, a predetermined item concerning the material or product to be processed is set as a "key", and the data of the item is set as a "value". For the file IDs and the file names, each of the items such as the file ID and the file name is set as the "key", while each of the file ID and the file name is set as a "value". The data format of the key-value pairs may employ, for example, the JSON format. Here, the JSON format is a format in which the name of an item and its value are paired with a colon, ":", separating the item name and the value. It should be noted that the data format of the key-value pair data is not limited to the JSON format. The comment line may widely adopt various other types of formats that can identify the type and value of the data. For example, the comment line may be written in XML format.

### Processing Information PI

Herein, data of predetermined items concerning materials and products to be processed may be referred to as "processing information PI" when appropriate. The processing information PI may contain at least the information about the material to be processed, and may contain other kinds of information when appropriate.

### Items of Processing Information PI

The data items that may be contained in the processing information PI may include, for example, the following items.
- Material ID
- Type of the material to be processed
- Product name of the material to be processed
- Size of the material to be processed
- Shape of the material to be processed (such as disc, block, etc.)
- Required area of the material to be processed (for example, what percentage of the entire material is used)
- List of information about products contained in the processing file

Herein, the "material ID" is set for each type of material so that the material of the workpiece can be identified in advance. In some cases, the workpiece may be a material that has been used, i.e., a used material. In that case, the material ID may be referred to as a "used material ID".

The "type of the material to be processed" may record various types of materials, such as ceramic material (for example, zirconia ceramic material), resin material, glass material, metal material, and wax material.

The "product name of the material to be processed" may record, for example, a product name of the workpiece when the workpiece is a commercially available product.

The "size of the material to be processed" may record the size of the workpiece.

The "shape of the material to be processed" may record the shape of the workpiece, such as disc, block, etc.

The "required area of the material to be processed" may be the data that indicates what percentage of the material is used by the product to be processed by the processing data. Such data can serve to find out how much of one material is used by the processing. In addition, such data may serve to calculate the material cost required by the processing.

The "list of information about products contained in the processing file" contains the information of the products to be processed by the processing program CP. The information that may be contained in the list includes, for example, the file name of the STL file that records the three-dimensional data of the product, the type of the product (crown, bridge, etc.), the number of products to be formed by the processing program CP, and the tooth number of the tooth to which the tooth filling formed as the product is to be fitted. Thus, the product processed by the dental processing machine 1 may be a dental prosthesis, such as an "inlay" or a "crown". The predetermined items concerning the product may contain the information of dental prosthesis such as "inlay" and "crown".

Furthermore, the CAM software may be programmed so that a comment line that records the file name of the milling file (Milling File Name) and the milling file ID (Milling File ID) can be inserted in the processing program CP.

### Milling File Name

Herein, the milling file name is a file name given to each milling file 21a in the CAM software-equipped device 21. The CAM software-equipped device 21 manages the milling files 21a with such file names.

### Milling File ID

Milling file IDs are assigned so that each of the milling files 21a has a milling file ID. Accordingly, even when different milling files 21a have the same file name, the milling file IDs enable the different milling files 21a to be distinguished from each other.

The CAM software may be programmed to prepare a milling file ID for identifying the corresponding processing program and to insert a comment line containing the prepared milling file ID into the processing program CP. In this case, the CAM software may be programmed so as to insert a comment line that also contains the file name in addition to the milling file ID into the processing program CP. Fig. 3 is a view illustrating an example of processing program CP in which a comment line S1 is inserted. As illustrated in Fig. 3, for example, the CAM software is programmed to insert a comment line that records the milling file name, the milling file ID, and the processing information PI into the processing program CP. It is also possible that the CAM software may be programmed to record the milling file name and the milling file ID in another different comment line from the comment line that records the processing information PI, and insert the other comment line into the processing program CP.

Such a process of inserting a comment line may be executed by the CAM software, for example, when the processing program CP is output to a predetermined memory storage area by the CAM software. In this case, each of the processing programs CP that is output from the CAM always contains a comment line that records the file name of the milling file, the milling file ID, and processing information PI. Also, a unique milling file ID is assigned to each of the processing programs CP. Therefore, the milling file ID identifies one of the processing programs CP. The memory storage area to which the processing program CP is output may be a predetermined memory storage area of the CAM software-equipped device 21 or may be a predetermined memory storage area of the operating device 11. The predetermined memory storage area may be a predetermined memory storage area of an external storage device, such as a USB memory or a hard disk drive (HDD) that is mounted to the operating device 11. The predetermined memory storage area may also be a predetermined memory storage area of an external server that utilizes a cloud computing system.

For example, the milling file 21a contains a processing program CP that specifies a processing procedure to be performed by the dental processing machine 1. In some cases, the processing program CP may be edited and updated in the CAM software-equipped device 21 with the file name of the milling file 21a unchanged. Even in this case, when the processing program CP is output to the predetermined memory storage area by the CAM software, a milling file ID is assigned to the milling file, and a comment line recording the milling file ID is inserted in the processing program CP. Thus, the milling file ID recorded in the comment line makes it possible to identify which one of the milling files is the one that have been sent to the operating device 11 at what time.

Accordingly, it is also possible to identify the processing program CP of the milling file that is identified by the milling file ID. Also inserted into the processing program CP is a comment line that records data of predetermined items concerning the material or product to be processed by the processing program.

In this case, the same processing program CP may sometimes be utilized to process different materials. In such a case, it is possible that different data may be prepared for the predetermined items concerning the materials or products to be processed by the processing programs be retained in the CAM software-equipped device 21. For example, for the process of inserting a comment line into a processing program, data of predetermined items concerning the materials or products to be processed by the processing program may be stored in association with corresponding processing programs CP. The CAM software may be programmed to insert a comment line that records data of predetermined items concerning the material or product to be processed by the processing program into a corresponding processing program CP that is associated with the data.

In this embodiment, the file name of the milling file and the milling file ID are given to the comment line of the processing program CP that is stored in the operating device 11. The file name of the milling file and the milling file ID are given to the comment line of the processing program CP by, for example, the CAM software-equipped device 21. This ensures that the processing program CP and the milling file ID are associated with each other with certainty, because the milling file ID is written into the processing program CP. In addition, the operating device 11 that has received the processing program CP is able to identify the milling file ID of the processing program CP by analyzing the processing program CP in a predetermined method.

As described above, in this embodiment, the milling file 21a containing the processing program CP is sent from the CAM software-equipped device 21 to the operating device 11. In this case, the processing program CP recorded in the milling file 21a has a comment line S1 that records a file ID and processing information PI, as illustrated in Fig. 3. This eliminates the need of the process of associating the file ID and the processing information PI additionally with the processing program CP because the processing program CP has the comment line S1 that records the file ID and the processing information PI. Also, the processing program CP is sent from the operating device 11 to the dental processing machine 1. The operating device 11 and the dental processing machine 1 include a processing unit configured to obtain the milling file ID and the data of predetermined items concerning the material or product to be processed from the comment line of the processing program CP. This enables the operating device 11 and the dental processing machine 1 to obtain the milling file ID and the data of predetermined items concerning the material or product to be processed from the comment line of the processing program CP.

Accordingly, the operating device 11 and the dental processing machine 1 can utilize the milling file ID and the data of predetermined items concerning the material or product to be processed, which are obtained from the comment line of the processing program CP, to create log data containing the milling file ID. In addition, the operating device 11 and the dental processing machine 1 can record the data of predetermined items concerning the material or product to be processed by the processing program CP.

### Job ID

In this embodiment, the processing program CP is also provided with a job ID. Here, the job ID is an ID that is assigned to the processing program CP when the processing program CP is sent from the operating device 1 1 to the dental processing machine 1. Here, in order to identify the processing program CP that has been sent to the dental processing machine 1, the job ID, which is a different ID from the milling file ID, is prepared. It is possible that either the operating device 11 or the dental processing machine 1 may create the job ID.

Specifically, each time a processing program CP is sent from the operating device 11 to the dental processing machine 1, a different job ID is assigned to the processing program CP. This job ID is different from the milling file ID. This means that, although the processing program CP has the same milling file ID, a different job ID is assigned to the processing program CP when, for example, the same processing program CP is resent from the operating device 11 to the dental processing machine 1. In this embodiment, the comment line of the processing program CP contains the file ID and processing information PI. Although the processing program CP contains the same file ID and the same processing information PI, the processing program CP is provided with a different job ID when the processing program CP is resent. In this way, when the same processing program CP is resent from the operating device 11 to the dental processing machine 1, the resent processing program CP can be identified by the job ID. Thus, both a milling file ID and a job ID, which is prepared separately from the milling file ID, are assigned to each of the processing programs CP sent to the dental processing machine 1. As a result, both the milling file ID and the job ID can be used to identify the processing program CP sent to the dental processing machine 1. This makes it possible to more specifically identify the processing program CP executed by the dental processing machine 1.

This embodiment makes it possible to acquire the file name, the file ID, and the processing information PI by analyzing the comment line S1 (see Fig. 3) of the processing program CP. As a result, the dental processing machine 1 is able to acquire the file name, the file ID, and the processing information PI. Also, the job ID is assigned to the processing program CP when the processing program CP is sent from the operating device 11 to the dental processing machine 1. In addition, the operating device 11 can create a job list JL in which the processing programs CP are classified by job IDs. Likewise, the dental processing machine 1 can also create a job list JL in which the processing programs CP are classified by job IDs. When the dental processing machine 1 executes a processing program CP, the dental processing machine 1 can sent log data containing the job ID to the operating device 11. It is also possible that the log data containing the job ID may be created by the operating device 11 based on the data sent from the dental processing machine 1 to the operating device 11. As a consequence, the operating device 11 is able to manage the log data based on the job ID to create a log file LF containing the job ID.

### Job List JL

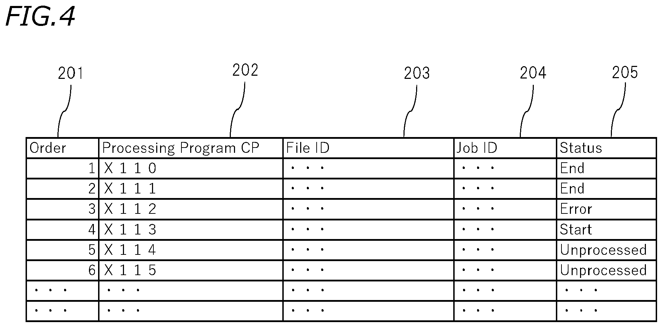

Fig. 4 is a view illustrating an example of a job list JL.

The operating device 11 sends processing programs CP to a dental processing machines 1. The operating device 11 creates a job list JL for the processing programs CP that have been sent to the dental processing machine 1. As illustrated in Fig. 4, the job list JL may be a list that associates the processing programs CP that are sent from the operating device 11 to the dental processing machine 1 with the numerical order in which the processing programs CP are to be executed by the dental processing machine 1. The job list JL shown in Fig. 4 is provided with columns 201 to 205 for recording the numerical order of execution, processing program CP, milling file ID, job ID, and status, respectively.

For example, in this embodiment, the processing programs CP are executed by the dental processing machine 1 in the order in which they are sent from the operating device 11 to the dental processing machine 1. In this case, it is possible that, in the column 201 for recording the numerical order of execution and the column 202 for recording processing programs CP, the processing programs CP may be listed in the order in which they are sent from the operating device 11 to the dental processing machine 1, to create a job list JL. The milling file IDs and the job IDs are recorded respectively in the columns 203 and 204 for recording file ID and job ID. The statuses of execution of the processing programs CP are recorded in the column 205 for recording status, according to data communication with the dental processing machine 1. Note that the statuses may be recorded using predetermined code numbers. Also in this embodiment, a job ID for identifying a processing program CP is assigned to each processing program CP when the processing program CP is sent from the operating device 11 to the dental processing machine 1. The job ID may be assigned at the same time as the job list JL is created.

### Log File LF

In this embodiment, the operating device 11 creates a log file LF in which log data of a processing program CP are recorded by the dental processing machine 1. The log data record what has been performed or what has not been performed by the processing program CP. The log file LF records log data including, for example, start, stop, pause, resumption, cancellation, and end of execution of the processing program CP, and the times at which these events occurred. The log file LF also records a predetermined error code if an error occurs while the processing program CP is being executed. The operating device 11 may be configured to create a log file LF based on the data obtained by communication with the dental processing machine 1.

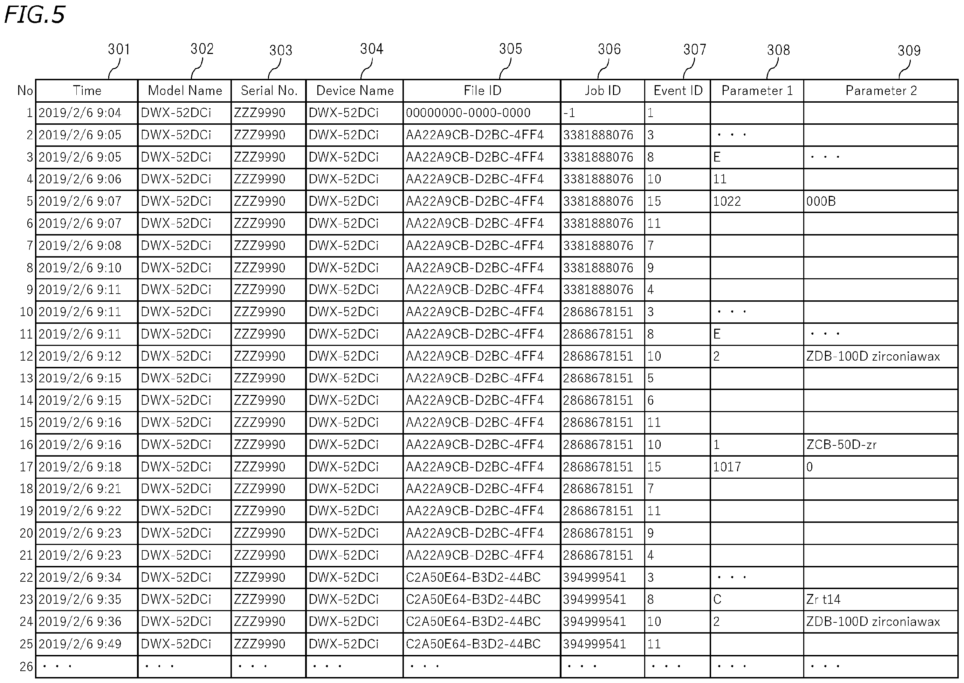

Fig. 5 is a view illustrating an example of the log file LF. In this embodiment, as illustrated in Fig. 5, a log file LF1 includes columns 301 to 309, which respectively record time, model name, serial number, device name, file ID, job ID, event ID, parameter 1, and parameter 2, with regard to log data.

Among these columns, the column 301 for recording time records the time at which the log data are acquired. Model name, serial number, and device name, which are respectively recorded in the columns 302 to 304, are the information for identifying the dental processing machine 1. These pieces of information are given to the log data by, for example, a firmware 1a3 of the dental processing machine 1. The columns 305 and 306 for recording file ID and job ID respectively record file IDs and job IDs.

### Event ID

The column 307 for recording event ID records predetermined codes, which are determined to respectively indicate various events, such as start, stop, pause, resume, cancel, end, and error of execution. The columns 308 and 309 for recording parameters 1 and 2 record pieces of information that respectively accompany the events. For convenience, numbers are assigned to the left side of each row of the log data in Fig. 5, in order to distinguish the log data.

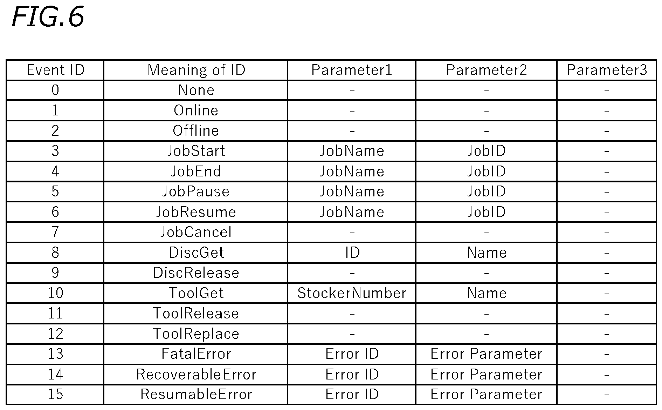

Fig. 6 shows an example of a code table used for recording event IDs. Among them, respective event IDs 3 to 15 indicate JobStart, JobEnd, JobPause, JobResume, JobCancel, DiscGet, DiscRelease, ToolGet, ToolRelease, ToolReplace, FatalError, RecoverableError, and ResumableError. Parameters 1 and 2 indicate pieces of information to be recorded in the log data, along with the corresponding events. Data corresponding to parameters 1 and 2 are referenced from other data and recorded in the log data.

Accordingly, the log file LF shown in Fig. 5 shows that the log data indicating a series of processes (i.e., jobs) performed by a processing program CP are recorded in the 2nd to 9th log data. Here, the 2nd to 9th log data record the times at which the following events occurred in the dental processing machine 1: start, disc get, tool get, occurrence of resumable error, tool release, cancel, disc release, and end, respectively. The 10th to 21st log data record that another series of jobs are executed, and then the 22nd log data and onward record that still another series of jobs are executed. The jobs are identified by the job IDs. The processing programs CP are identified by the file IDs.

It is also possible that a similar log file LF1 may be created by a firmware 1a3 of the dental processing machine 1. When this is the case, the operating device 11 may be configured to acquire the log file LF1 created by the firmware 1a3 of the dental processing machine 1. For convenience in illustration, the log file created by the dental processing machine 1 is referred to as a "log file LF1" as appropriate. The log file recorded by the operating device 11 is referred to as a "log file LF". This makes it possible to distinguish the two log files.

### Processing Information Data PD

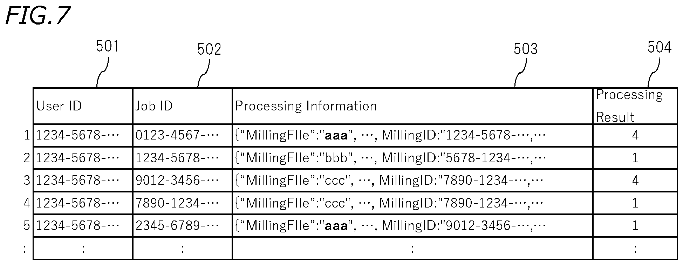

Fig. 7 is a view illustrating an example of processing information data PD. Processing information data PD are acquired from a job ID and the comment line S1 (see Fig. 3) of the processing program CP. The processing information data PD is a data file containing a file ID and a data group containing data of predetermined items concerning the material or product to be processed.

The processing information data PD shown in Fig. 7 contains record columns 501 to 504, which sequentially record user IDs, job IDs, processing information, and processing results, respectively. Herein, the user IDs are assigned to the users who manage the dental processing machine 1. A user ID may be contained, for example, in a portion of the log data sent from the dental processing machine 1. In addition, job IDs are recorded in the record column 502 for recording job IDs. Data acquired by analyzing the comment line S1 of the processing program CP are recorded in the record column 503 for recording processing information.

In this embodiment, the record column 503 for recording processing information contains data groups each containing a file name, a milling file ID, and data of predetermined items concerning the material or product to be processed. These data groups may be recorded in, for example, the JSON format. The record column 504 for recording processing results may record the results of execution of a processing program CP, obtained from the log data identified by a job ID. In the example shown in Fig. 7, the results of execution of the processing program CP are recorded, for example, using predetermined code numbers.

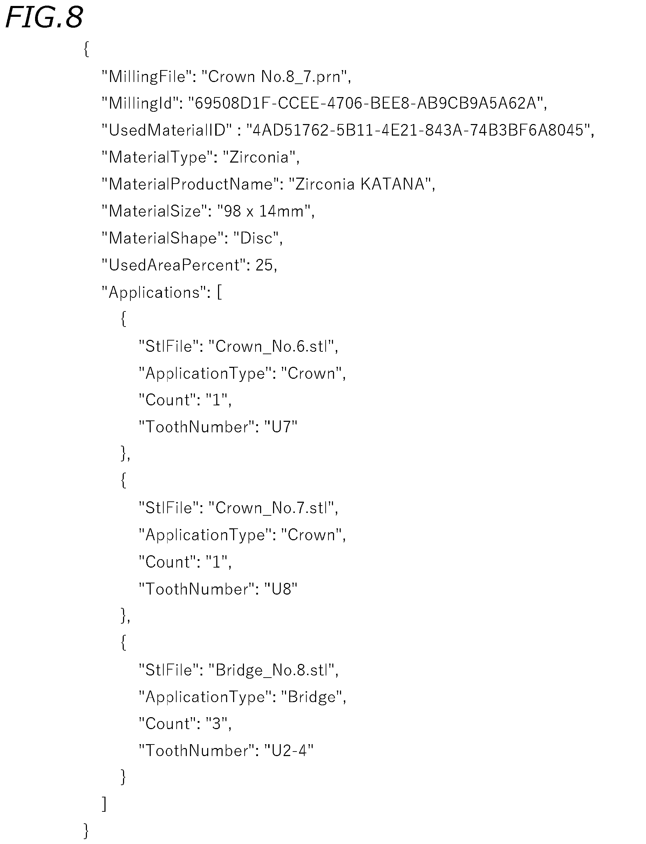

From such processing information data PD, it is possible to identify the processing (i.e., the job) performed by the dental processing machine 1 using the job ID, and it is also possible to acquire the data group recorded in the comment line S1 (see Fig. 3) of the processing program CP, which was executed in the job. Fig. 8 is a view illustrating an example of data acquired from a comment line S1. From the comment line S1, it is possible to acquire the processing information PI containing the file name of the milling file 21a, the file ID, and data of predetermined items concerning the material or product to be processed, as illustrated in Fig. 8. These data are acquired every time the dental processing machine 1 executes a processing program CP, in other words, for each of the jobs identified by a job ID.

Thus, data of predetermined items concerning the material or product to be processed are recorded every time the dental processing machine 1 executes a processing program CP. As a result, more detailed data analysis is possible every time the dental processing machine 1 executes a processing program CP, in other words, for each of the jobs identified by a job ID. In addition, the data of predetermined items concerning the material or product to be processed are obtained for each of the jobs identified by a job ID. Therefore, it is possible to calculate the cost of the processed material for each process of the dental processing machine 1, for example. The dental processing machine 1 is used to mill dental fillings. In that case, because the dental fillings are small in size, a plurality of processed products (dental fillings) may be produced from a single workpiece retained in a disc 1i1 (see Fig. 2) of the dental processing machine 1. In addition, the dental fillings have complicated shapes, so it is difficult to calculate how much of the workpiece has been used for the processed products. With the method and device proposed herein, data of predetermined items concerning the material or product to be processed are obtained for each work of the dental processing machine 1. This makes it possible to carry out more detailed analysis on the material to be processed. Because such data groups are acquired from the data recorded in the comment line S1 of the processing program CP, they are not altered after having been output from the CAM software. As a result, it is unlikely to mistake the data for each of the jobs identified by job IDs, so data management becomes easier.

In this operating system 10, the operating device 11 is data-communicably connected to the server 12. The operating device 11 sends various data, such as job lists JL, log files LF, and processing information data PD, to the server 12. The server 12 records the data sent from the operating device 11, such as job lists JL, log files LF, and processing information data PD, into a database 12a. In addition, the server 12 may record milling files 21a containing processing programs CP. In this case, the server 12 may record the milling files 21a and the file IDs in association with each other. When the milling files 21a and the file IDs are associated with each other, it is possible to find out a milling file 21a and a processing program CP from the log file Lf, the processing information data PD, and the like.

Further, the external device 13 is able to obtain various data, such as job lists JL, log files LF, and processing information data PD, from the server 12. This enables the external device 13 to carry out data analysis based on the data such as the job lists JL, the log files LF, and the processing information data PD. The operating system 10 may be configured to access the operating device 11 via the server 12 and to remotely operate the operating device 11 and the dental processing machine 1.

The server 12 is not limited thereto. The server 12 may also be configured to receive various information and data, such as the information that the operating device 11 has sent to the dental processing machine 1 and the data concerning the status of the dental processing machine 1 that the operating device 11 has obtained through the firmware 1a3. The server 12 includes the database 12a, and it may store, for example, data concerning the status of the dental processing machine 1, which are sent from the operating device 11. The server 12 is further connected data-communicably to the external device 13. The external device 13 may be configured to acquire the data accumulated in the server 12 as appropriate.

### Dental Processing Machine 1

Specific drawings of the dental processing machine 1 are not provided herein. It should be noted that only an example of the dental processing machine 1 will be shown herein. The dental processing machine 1 is not limited to the embodiments described herein. As illustrated in Fig. 2, the dental processing machine 1 includes a control device 1a, a communication device 1b, a spindle 1c, a clamp 1d, a rotary support mechanism 1e, a 3-axis moving mechanism 1f, a tool magazine 1g, a tool changer 1h, a disc rack 1i, and a disc changer 1j, for example. In this embodiment, the workpiece is retained by a disc 1i1.

The control device 1a is a device for controlling the dental processing machine 1. The communication device 1b is a device for exchanging data with other devices, such as the operating device 11. The spindle 1c is a device for holding and rotating a tool. The clamp 1d is a retainer for retaining a disc that holds a workpiece. The rotary support mechanism 1e is a mechanism for supporting the clamp at a predetermined angle with respect to the spindle 1c. The rotary support mechanism 1e may rotate the clamp, for example, about a predetermined X-axis and about a predetermined Y-axis. The 3-axis moving mechanism 1f is a mechanism for moving the rotary support mechanism 1e along three axes, a lateral axis (X-axis), a front-rear axis (Y-axis), and a vertical axis (Z-axis). The tool magazine 1g is a container unit for accommodating a plurality of tools 1g1 that are to be attached to the spindle 1c. In the tool magazine 1g, predetermined locations for accommodating the tools 1g1 are allocated so that each of the tools 1g1 can be accommodated in each respective location, and the locations for accommodating the tools 1g1 are provided with code numbers assigned thereto for identifying the tools 1g1. The tool changer 1h is a mechanism for changing a tool accommodated in the tool magazine 1g with a tool attached to the spindle 1c. The disc rack 1i is a container unit for accommodating a plurality of discs 1i1 (also referred to as holders) that retain workpieces. In the disc rack 1i, predetermined locations for accommodating the discs 1i1 are allocated so that each of the discs 1i1 can be accommodated in each respective location, and the locations for accommodating the discs 1i1 are provided with code numbers assigned thereto for identifying the discs 1i1. The disc changer 1j is a mechanism in the disc rack 1i for exchanging a disc 1i1 to be attached to the clamp 1d.

### Disc 1i1

The dental processing machine 1 uses various types of materials for the workpiece retained in the disc 1i1. The workpiece may be, for example, ceramic material (for example, zirconia ceramic material), resin material, glass material, metal material, and wax material. In addition, the workpiece may be in various kinds of shapes, such as a disc shape and a block shape.

### Workpiece

The workpiece may be attached to, for example, a disc 1i1 so that it can be mounted to the clamp 1d. The workpiece may be attachable to and detachable from the disc 1i1. The workpiece has a sufficient size for the product. With the workpiece, a certain number of products can be formed by the dental processing machine 1. For this reason, after an unprocessed workpiece is attached to the disc 1i1, for example, a certain number of processing programs CP are executed for the workpiece fitted to the disc 1i1, to shape a certain number of products. The workpiece is kept attached to the disc 1i1 as the processing continues, until the workpiece is almost fully used. When the workpiece is almost fully used, the workpiece is detached from the disc 1i1, and another new workpiece is attached to the disc 1i1.

Thus, the workpiece attached to the disc 1i1 may be either an unprocessed product, or in a state of being used, from which a certain number of products have already been produced.

The three-dimensional shape of the workpiece attached to the disc 1i1 may be recorded as, for example, CAD data. The shapes of the processed products may be managed by three-dimensional data, such as STL files (stereolithography files) recorded in a so-called STL (stereolithography) format.

The disc 1i1 may be marked with an identifier, for example. The identifier (also referred to as "disc ID") may be a two-dimensional code, a one-dimensional code, a mark, a numeral, a pattern, or an image, which is directly printed or engraved on the disc 1i1. The dental processing machine 1 may be equipped with a reader for reading such an identifier of the disc 1i1. Such a reader may be, for example, one that identifies the disc 1i1 based on an image of the identifier captured by a camera provided for the dental processing machine 1.

The dental processing machine 1 is furnished with monitoring devices for detecting the statuses of various parts thereof, such as sensors 1k1 and cameras 1k2. The sensors 1k1 may include: such sensors as encoders, ammeters, and voltmeters that are mounted to various parts including the rotary support mechanism, the tool changer, and the disc changer, and a motor for rotating the spindle; a temperature sensor for obtaining an environment temperature during processing; and a sensor for detecting the opening and closing of a cover of the housing. The cameras 1k2 may include a plurality of cameras disposed in the housing so that, for example, the state of the disc 1i1 and the workpiece 1i2 that are supported by the clamp 1d and the state of various parts such as the tool magazine 1g and the disc rack 1i can be shown with the tool mounted to the spindle 1c.

The dental processing machine 1 includes a control device 1a. The control device 1a performs various processes for the dental processing machine 1. The control device 1a may be implemented by, for example, a computer that is operated according to a predetermined program. For example, the configurations and operations of the control device 1a may be embodied as a database that stores various data embodied by a computer, a data structure, or a processing module that performs predetermined computing processes according to a predetermined program, or as part of the database, the data structure, or the processing module.

### Processing by Dental Processing Machine 1

The workpiece is retained by the disc 1i1. The disc 1i1 is mounted to the clamp 1d. The clamp 1d is moved and rotated by the rotary support mechanism 1e and the 3-axis moving mechanism 1f. A tool 1g1 is attached to the spindle 1c. The spindle 1c, the rotary support mechanism 1e, and the 3-axis moving mechanism 1f are controlled by the control device 1a. The rotary support mechanism 1e and the 3-axis moving mechanism 1f are controlled so that the tool 1g1 attached to the spindle 1c hits the workpiece fitted to the disc 1i1 at a desired position in a desired direction. The spindle 1c, the rotary support mechanism 1e, and the 3-axis moving mechanism 1f are controlled so that the workpiece retained by the disc 1i1 is milled into a desired shape. Such a milling process is controlled by the processing programs CP1 read by the firmware 1a3 of the dental processing machine 1.

In this embodiment, the control device 1a of the dental processing machine 1 includes, for example, a memory storage unit 1a1 and a processing unit 1a2, as illustrated in Fig. 2. The firmware 1a3 is installed in the control device 1a. The firmware 1a3 is programmed so that the dental processing machine 1 performs predetermined operations.

The memory storage unit 1a1 includes a first memory storage section 1a11, a second memory storage section 1a12, a third memory storage section 1a13, a fourth memory storage section 1a14, a fifth memory storage section 1a15, and a sixth memory storage section 1a16.

The first memory storage section 1a11 stores a plurality of processing programs CP1 that are to be executed by the dental processing machine 1. Herein, the term "processing program CP1" refers to a processing program stored in the first memory storage section 1a11 of the dental processing machine 1.

The second memory storage section 1a12 stores a job list JL1 that stores the order of the processing programs CP1 to be executed by the dental processing machine 1.

The third memory storage section 1a13 stores a log file LF1 (also referred to as a log file) that records log data of the processing programs CP1.

The fourth memory storage section 1a14 stores a master file for determining the error state of the dental processing machine 1, and error codes for identifying the error states, in association with each other.

The fifth memory storage section 1a15 stores the initial state (i.e., the default state) of the dental processing machine 1, such as the initial states of the spindle 1c, the clamp 1d, the rotary support mechanism 1e, the 3-axis moving mechanism 1f, the tool changer 1h, and the disc changer 1j of the dental processing machine 1.

The sixth memory storage section 1a16 stores information about the tools 1g1 accommodated in the tool magazine 1g, the locations in which the tools 1g1 are accommodated, the discs 1i1 accommodated in the disc rack 1i, and the workpieces retained by the discs 1i1.

The processing unit 1a2 executes required processes according to the firmware 1a3. The processing unit 1a2 includes a first processing section 1a21, a second processing section 1a22, a third processing section 1a23, a fourth processing section 1a24, a fifth processing section 1a25, a sixth processing section 1a26, and a seventh processing unit 1a27. Each of the processes that are executed by these processing sections will be described below. It should be noted that only part of the processes executed by the dental processing machine 1 is illustrated in Fig. 2, and not all the processes executed by the dental processing machine 1 are illustrated therein.

The first processing section 1a21 is configured to cause the first memory storage section 1a11 to store the processing programs CP sent from the operating device 11, according to an instruction from the operating device 11. Herein, a processing program CP that is stored in the first memory storage section 1a11 is referred to as a "processing program CP1".

The second processing section 1a22 is configured to create a job list JL1 and store the job list JL1 in the second memory storage section 1a12, according to an instruction from the operating device 11.

The third processing section 1a23 is configured to control the dental processing machine 1 according to the processing programs CP1.

The fourth processing section 1a24 is configured to detect an error in the dental processing machine 1. The error in the dental processing machine 1 may be detected by, for example, a matching process in which the data obtained by the sensors 1k1 and the cameras 1k2 are matched against the master file stored in the fourth memory storage section 1a14.

The fifth processing section 1a25 is configured to perform data communication with other devices such as the operating device 11 via the communication device 1b. The dental processing machine 1 receives, for example, processing programs CP from the operating device 11. The dental processing machine 1 is configured to send the record of execution of the processing programs CP1, the status of the dental processing machine 1, the data acquired by the sensors 1k1 and the cameras 1k2, the error codes, and the like, to the operating device 11.

The sixth processing section 1a26 is configured to bring the dental processing machine 1 back to the initial state. In the initial state of the dental processing machine 1, the tool 1g1 is returned to a predetermined location in the tool magazine 1g. The disc 1i1 is also returned to a predetermined location in the disc rack 1i. This process may also be called an initial state-returning process. By this process, the spindle 1c, the clamp 1d, the rotary support mechanism 1e, the 3-axis moving mechanism 1f, and so forth are returned to predetermined locations and states.

The seventh processing section 1a27 is configured to set reference locations for controlling these components. For example, after the spindle 1c, the clamp 1d, the rotary support mechanism 1e, and the 3-axis moving mechanism 1f have been returned to the predetermined locations, the reference locations for controlling them are set based on detection by the sensors. Such a process is commonly referred to as a zero tracking process, or zero point calibration.

The block diagram of Fig. 2 lists constituent components of the dental processing machine 1. It should be noted, however, that the constituent components listed in the block diagram of Fig. 2 are only part of the dental processing machine 1, and the dental processing machine 1 is not limited to including only the constituent components listed in the block diagram of Fig. 2.

For example, it is possible that the log file recording the log data of the processing programs CP1, the master file for determining the error state of the dental processing machine 1, the error codes for identifying the error state, and so forth may be stored in the operating device 11. This means that the dental processing machine 1 may not be provided with the third memory storage section 1a13, or the fourth memory storage section 1a14.

In addition, the spindle 1c, the clamp 1d, the rotary support mechanism 1e, the 3-axis moving mechanism 1f, the tool magazine 1g, the tool changer 1h, the disc rack 1i, the disc rack 1i, and the disc changer 1j, for example, are enclosed in a housing. The housing is configured so that its cover can be opened and closed as appropriate.

### Processing Program CP1

In this embodiment, the processing programs CP1 are the same as the foregoing processing programs CP. However, as described previously, a job ID is assigned to each of the processing programs CP1 when it is sent from the operating device 11 to the dental processing machine 1. In this respect, the processing program CP that is stored in the first memory storage section 1a11 (see Fig. 2) of the dental processing machine 1 is referred to as a "processing program CP1", where appropriate, in the present specification.

### Job List JL1

The job list JL1 is a list that specifies the order in which the dental processing machine 1 executes the processing programs CP1, as mentioned previously. Here, the order in which the processing programs CP1 are executed is specified in the job list JL1. Note that the order in which the processing programs CP1 are to be executed is determined by the operating device 11. For example, the order in which the dental processing machine 1 executes the processing programs CP1 may be determined to be the order in which the operating device 11 has sent the processing programs CP1 to the dental processing machine 1. In this case, the job list JL1 is created such that the order in which the dental processing machine 1 executes the processing programs CP1 is determined to be the order in which the operating device 11 has sent the processing programs CP1 to the dental processing machine 1.

### Log File LF1

The dental processing machine 1 creates a log file LF1 that records log data of the processing programs. The log file LF1 records events such as start, stop, pause, resumption, cancellation, and end of execution of the processing program recorded in the job list, and the times at which these events occurred. The log file LF1 also records a predetermined error code if an error occurs during execution of a processing program recorded in the job list. In this embodiment, because a job ID is assigned to each of the processing programs CP1 sent to the dental processing machine 1, the job list JL1 and the log data of the log file LF1 may contain the job ID.

### Firmware 1a3

Firmware 1a3 controls the dental processing machine 1. The firmware 1a3 includes processing modules for executing various processes of the above-described processing unit 1a2. Hereinafter, the functions of the firmware 1a3 of the dental processing machine 1 will be described. The firmware 1a3 may be programmed to implement the following functions as processes performed by a computer.

The firmware 1a3 instructs the dental processing machine 1 to communicate with the operating device 11 and cause the first memory storage section 1a11 to store the processing programs CP1.

The firmware 1a3 instructs the dental processing machine 1 to create a job list JL1.

The firmware 1a3 instructs the dental processing machine 1 to execute the processing programs CP1 stored in the first memory storage section 1a11 in sequence according to the job list JL1 stored in the second memory storage section 1a12.

The firmware 1a3 also instructs the dental processing machine 1 to create a log file LF1.

For example, the firmware 1a3 records the start time and end time of execution of each of the processing programs CP1 in the log file LF1. The firmware 1a3 also records, in the log file LF1, the time at which a tool is attached to the spindle 1c, the time at which the tool is returned to the tool magazine 1g, the time at which the disc 1i1 is held by the clamp 1d, the time at which the disc 1i1 is returned to the disc rack 1i, etc.

For example, the firmware 1a3 instructs the dental processing machine 1 to create the job list JL1 so that the processing programs CP1 can be executed in the order in which the processing programs CP1 have been sent from the operating device 11 to the dental processing machine 1. As described previously, when the job list JL1 is provided with a record column, the status of each of the processing programs CP1 is recorded in the record column. In this case, the processing unit 1a2 of the dental processing machine 1 may be configured to execute the processing programs CP1 sequentially according to the job list JL1.

The firmware 1a3 provides the function of detecting an error in the dental processing machine 1. The firmware 1a3 is programmed to, if an error is detected, instruct the dental processing machine 1 to execute a process corresponding to the error. For example, the firmware 1a3 is programmed to, if an error is detected, instruct the dental processing machine 1 to execute a predetermined process based on the error code of the detected error. The firmware 1a3 allows the dental processing machine 1 to temporarily suspend the processing program CP1 based on the error code of the detected error. Next, based on the error code, it is determined whether or not the error is a self-recoverable error in the dental processing machine 1. Then, if the error is a self-recoverable error in the dental processing machine 1, error recovery is attempted. If the error is self-recovered and the error is resolved, the dental processing machine 1 resumes execution of the processing programs CP1. Based on the error code of the detected error, the dental processing machine 1 may be stopped and the initial state-returning process is executed to bring the dental processing machine 1 to a predetermined initial state. The firmware 1a3 allows the zero point calibration to be executed in the initial state, and thereafter instructs the dental processing machine 1 to resume execution of the processing programs CP1, when restarting the dental processing machine 1.

The firmware 1a3 provides the function of notifying the operating device 11 of data concerning the status of the dental processing machine 1. The data concerning the status of the dental processing machine 1 may include: times of start, stop, pause, resumption, cancellation, and end of the processing program CP1; data acquired by the sensors 1k1 and the cameras 1k2 provided for the dental processing machine 1; and error codes, for example. The firmware 1a3 allows the dental processing machine 1 to send these data to the operating device 11 at predetermined timing. The firmware 1a3 also allows the dental processing machine 1 to send these data to the operating device 11 in response to a request from the operating device 11.

Note that the dental processing machine 1 has a limited memory storage capacity. For this reason, the processing programs CP1, the log file LF1, the job list JL1, etc. are deleted as appropriate at predetermined timing. For example, the log file LF1 may be deleted after execution of the processing program CP1 has been completed and the data acquired during the execution of the processing program CP1 have been transmitted to the operating device 11.

In this embodiment, each of the processing programs CP contains the comment line S1 recording a data group containing the file ID and the data of predetermined items concerning the material or product to be processed. For this reason, the firmware 1a3 of the dental processing machine 1 may be configured to analyze the comment line S1 of the processing program CP and to acquire the data group containing the file ID and the data of predetermined items concerning the material or product to be processed. Therefore, the job list JL1 and the log data of the log file LF1 created by the dental processing machine 1 are allowed to contain the file ID acquired from the comment line S1 of the processing program CP as appropriate. Moreover, in this embodiment, a job ID is assigned to the processing program CP when the processing program CP is sent from the operating device 11 to the dental processing machine 1. Therefore, the job list JL1 and the log data of the log file LF1 are allowed to contain the job ID as appropriate.

Some embodiments of the dental processing machine 1 and the operating system for the dental processing machine 1 proposed herein have been described above. Hereinbelow, embodiments of the operating device 11 and the operating system 10 for the dental processing machine 1 will be described further according to the present disclosure.

As illustrated in Fig. 1, an embodiment of the dental processing machine-operating device 11 proposed herein includes a memory storage unit A, a processing unit B, a processing unit C, a processing unit D, and a processing unit E.

The memory storage unit A contains processing programs CP each specifying a processing procedure executed by the dental processing machine 1, and also stores milling files 21a associated with milling file IDs.

The processing unit B is configured to send the processing program CP contained in the milling file 21a associated with the milling file ID to the dental processing machine 1.

In order to identify the processing program CP sent to the dental processing machine 1 by the processing unit B, the processing unit C is configured to prepare a different job ID from the milling file ID and associate the prepared job ID with the processing program CP that has been sent to the dental processing machine 1.

With the operating device 11 proposed herein, a job ID for identifying the processing program CP sent to the dental processing machine 1 is prepared separately from the milling file ID, and the prepared job ID is associated with the processing program CP. Thus, each of the processing programs CP sent to the dental processing machine 1 can be identified using both the milling file ID and the job ID, which is prepared separately from the milling file ID. This makes it possible to more specifically identify the processing program CP executed by the dental processing machine 1. For example, even when the same processing program CP is resent from the operating device 11 to the dental processing machine 1, the resent processing program CP can be identified by the job ID. Moreover, because the processing program CP is associated with the milling file ID, it is possible to identify the milling file 21a that contains the processing program CP. This makes it possible to more specifically identify the processing program CP executed by the dental processing machine 1.

The processing unit D is configured to create a log file that records the milling file ID and the job ID for the processing program CP. As a result, the milling file ID and the job ID are contained in the log data. Therefore, the processing program CP and the milling file 21a that have been sent to the dental processing machine 1 can be identified from the log data. This makes it possible to more specifically identify the processing program CP executed by the dental processing machine 1.

In addition, the milling file 21a may further contain data of predetermined items concerning the material to be processed. The processing unit E of the operating device 11 may be configured to create processing information data PD in which the data of predetermined items concerning the material to be processed are associated with a job ID that is assigned when the processing program CP contained in the milling file 21a is sent to the dental processing machine 1. In this case, the processing information data PD are created such that the job ID is associated with the data of predetermined items concerning the material to be processed. In other words, every time the dental processing machine 1 executes a processing program CP, the data of predetermined items concerning the material to be processed are recorded based on the job ID. As a result, more detailed data analysis concerning the material to be processed is possible every time the dental processing machine 1 executes a processing program CP, in other words, for each of the jobs identified by a job ID.

The dental processing machine-operating system 10 proposed herein includes the server 12 data-communicably connected to the operating device 11.

Here, the operating device 11 may include, for example, a processing unit F configured to send log data containing a milling file ID and a job ID to the server 12. In this case, the log data may be sent as a log file LF recording a plurality of log data.

The server 12 may include a recording unit 12a for recording the log data.

The operating device 11 may also include a processing unit G configured to send, to the server 12, processing information data PD in which a job ID is associated with data of predetermined items concerning the material to be processed. In this case, the server 12 may include a recording unit 12a for recording processing information data PD. In the operating system 10 shown in Fig. 1, such a recording unit 12a of the server 12 is composed of the database 12a of the server 12.

In this embodiment, the CAM software-equipped device 21 functions as a processing program-creating device proposed herein, as illustrated in Fig. 1. Here, the CAM software-equipped device 21 includes a processing program storage unit 101, a material data storage unit 102, a comment insertion process unit 103, and an output process unit 104.

The processing program storage unit 101 is configured to store a processing program CP specifying a processing procedure to be performed by the dental processing machine 1.

The material data storage unit 102 is configured to store data of predetermined items concerning the material or product to be processed by the processing program CP stored in the processing program storage unit 101.

The comment insertion process unit 103 is configured to prepare a file ID, and to insert a comment line S1 containing the prepared file ID and the data of predetermined items stored in the material data storage unit 102 into the processing program CP.

Here, the comment insertion process unit 103 may be configured to prepare a file ID for identifying the processing program CP stored in the processing program storage unit 101, and to insert a comment line S1 containing the prepared file ID into the processing program CP.

Alternatively, the comment insertion process unit 103 may be configured to insert a comment line S1 containing the data of predetermined items stored in the material data storage unit 102 into the processing program CP.

The output process unit 104 is configured to output the processing program CP stored in the processing program storage unit 101 to a predetermined memory storage area. In this case, the comment insertion process unit 103 may be configured to insert the comment line S1 into the processing program CP when the processing program CP is output by the output process unit 104.

In another embodiment, the comment insertion process unit 103 may be configured to prepare a file ID, and to insert a first comment line containing the prepared file ID and a second comment line containing the data of predetermined items stored in the material data storage unit 102, into the processing program CP. In this case, the comment insertion process unit 103 may be configured to insert the first comment line and the second comment line into the processing program CP when the processing program CP is output by the output process unit 104.

The foregoing describes examples of embodiments in which processing information PI containing a file ID (milling file ID) for identifying a milling file 21a and data of predetermined items concerning the material to be processed is recorded in the comment line S1 of the processing program CP. However, such embodiments do not limit the way of associating the file ID, the data of predetermined items concerning the material to be processed, and the processing program CP and the milling file 21a with each other. For example, it is possible to additionally create reference data for associating the file ID, the data of predetermined items concerning the material to be processed, and the processing program CP and the milling file 21a with each other. Furthermore, it is also possible to create reference data for associating the file ID, the data of predetermined items concerning the material to be processed, the processing program CP, and the job ID with each other.

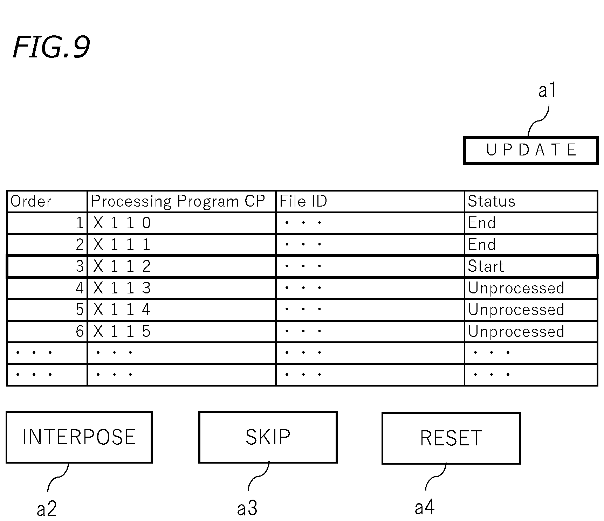

Fig. 9 shows an example of a job list JL that is displayed on a display of the operating device 11 proposed herein. Note that the job list JL displayed on the display is not limited to the example shown in Fig. 9. For such a job list JL, a corresponding job list JL1 is similarly retained also in the dental processing machine 1. The example shown in Fig. 9 illustrates the state in which the third one of the processing programs CP in the job list JL is currently being executed. The fourth to sixth ones of the processing programs CP have not yet been processed.

It is often the case that, while the dental processing machine 1 is executing processing programs CP as illustrated in Fig. 9, it is desired to interpose and process another processing program CP before the processing programs CP that have not yet been processed. When this is the case, it is necessary to change the processing order of the processing programs CP that has been sent to the dental processing machine 1. When this is to be handled by an operator, the job list JL1 recorded in the dental processing machine 1 is reset at the time when the third one of the processing programs CP has been completed. Then, the information of the processing programs CP to be executed by the dental processing machine 1 is sent to the dental processing machine 1 sequentially. Herein, an operating device 11 is proposed that is able to simplify the operation performed by the operator in such cases.

As illustrated in Fig. 1, an embodiment of the operating device 11 for operating the dental processing machine 1 includes a processing program storage unit 121, a first list storage unit 122, a first status recording unit 123, a first selecting unit 124, a first interposing process unit 125, a second interposing process unit 126, a first display process unit 127, and a first update process unit 128. The operating device 11 may also include a first communication unit 129 configured to mutually communicate data between the operating device 11 and the dental processing machine 1.

The processing program storage unit 121 stores a plurality of processing programs CP each specifying a processing procedure to be performed by the dental processing machine 1.

The first list storage unit 122 stores a job list JL in which a plurality of processing programs CP each defining a processing procedure performed by the dental processing machine 1 are associated with and an order in which the plurality of processing programs CP are to be executed.

The first status recording unit 123 acquires, from the dental processing machine 1, execution statuses of the plurality of processing programs CP contained in the job list JL, and records the execution statuses of the plurality of processing programs CP.

The first selecting unit 124 is configured to select at least one of the processing programs CP from among the processing programs CP that are stored in the processing program storage unit 121 or the processing programs CP that are contained in the job list JL. As just described, one of the processing programs CP stored in the processing program storage unit 121 may be selected as the interposing processing program CP. This means that it is possible to add another processing program CP, other than the processing programs CP already listed in the job list JL, to the job list JL and interrupt the job list JL.

The first interposing process unit 125 is configured to interpose the processing program CP selected by the first selecting unit 124 into the job list JL next after one of the processing programs CP that is currently being executed by the dental processing machine 1.

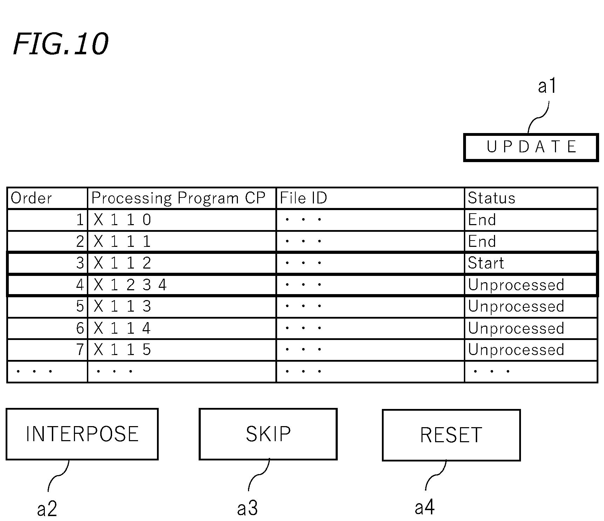

In this case, the process of the first interposing process unit 125 allows the processing program CP selected by the first selecting unit 124 to be interposed next after the one of the processing programs CP that is currently being executed by the dental processing machine 1 in the job list JL. Fig. 10 shows an example of a job list JL that is displayed on a display of the operating device 11. Fig. 9 shows a state before the process of the first interposing process unit 125 is executed. Fig. 10 shows a state in which the process of the first interposing process unit 125 has been executed. In the embodiment shown in Fig. 10, another processing program CP is interposed newly at the fourth position after the third one of the processing programs CP, which is currently being executed. The processing programs CP that were recorded at the fourth to sixth positions before the interposing process are moved to the fifth to the seventh positions, respectively.

Such a process may be performed as follows. For example, the operating device 11 stores the processing program CP selected by the first selecting unit 124. Then, in the job list JL displayed on a predetermined display of the operating device 11, the processing program CP selected by the first selecting unit 124 may be displayed in such a state as to be interposed at the fourth position in the list. Then, the dental processing machine 1 performs the process of interposing the information of the processing program CP selected by the first selecting unit 124 into the fourth position in the job list JL1, for example, at the time when the third one of the processing programs CP has been completed. For the process of interposing the information of the processing program CP selected by the first selecting unit 124 to the fourth position, the processing programs CP that are recorded at the fourth to sixth positions in the job list JL1 may be moved to the fifth to seventh positions in the job list JL1, respectively, and the information of the processing program CP selected by the first selecting unit 124 may be interposed into the fourth position.

However, the process of interposing the information of the processing program CP selected by the first selecting unit 124 to the fourth position is not limited to such an embodiment. For example, the job list JL1 of the dental processing machine 1 is erased once, then the information of each of the first to seventh ones of the processing programs CP is sequentially forwarded according to the information of the processing programs CP recorded in the job list JL of the operating device 11, and the status of each of the first to the third ones of the processing programs CP is set to End. By this interposing process, the job list JL1 in the dental processing machine 1 is brought to a state in which the status of each of the first to the third ones of the processing programs CP has been turned to End. Then, the processing program CP selected by the first selecting unit 124 is set to the fourth position in the job list JL1. Furthermore, the processing programs CP that were previously recorded at the fourth to sixth positions in the job list JL1 are moved respectively to the fifth to seventh positions in the job list JL1. Thus, the interposing process may be configured so that the job list JL1 in the dental processing machine 1 is revised at appropriate timing.

The process of the first interposing process unit 125 may be configured so that the just-described series of processes are executed by the control of the operating device 11, or by cooperative combinations of the operating device 11 and the firmware 1a3. It should be noted that the process of the first interposing process unit 125 described herein is merely an illustrative example, and it may be executed by other procedures. The example shown herein illustrates a case in which the first selecting unit 124 selects only one processing program CP. It is possible that the first selecting unit 124 may select a plurality of processing programs CP. When this is the case, the first selecting unit 124 may be configured to determine the order in which the selected plurality of processing programs CP are to be interposed in the job list. In this case, the first interposing process unit 125 may be configured to interpose the plurality of processing programs CP selected by the first selecting unit 124 into the job list in the determined order.

In another embodiment, the operating device 11 may also include a second interposing process unit 126. The operating device 11 may include both the first interposing process unit 125 and the second interposing process unit 126. Here, the second interposing process unit 126 is configured to interpose the processing program CP selected by the first selecting unit 124 at an arbitrary position in the job list JL other than the one of the processing programs CP that is currently being executed by the dental processing machine 1. In this case, the processing program CP selected by the first selecting unit 124 can be interposed at an arbitrary position in the job list JL other than the one of the processing programs CP that is currently being executed by the dental processing machine 1. In the case of Fig. 9, for example, the processing program CP selected by the first selecting unit 124 may be interposed after the fourth one of the processing programs CP. It is also possible that a plurality of processing programs CP may be selected by the first selecting unit 124. When this is the case, the first selecting unit 124 may be configured to determine respective positions in the job list JL at which the plurality of processing programs CP selected by the first selecting unit 124 are to be interposed. In this case, the first interposing process unit 125 may be configured to interpose the plurality of processing programs CP selected by the first selecting unit 124 at the determined positions in the job list JL.

The process of the second interposing process unit 126 may be performed as follows. For example, the operating device 11 is caused to store the processing program CP selected by the first selecting unit 124 and the position at which the processing program CP is to be interposed, which is determined by the first selecting unit 124. Then, although the job list JL in the operating device 11 is not changed, the job list JL to be displayed on a predetermined display of the operating device 11 may be displayed in such a state that the processing program CP selected by the first selecting unit 124 is interposed at the determined position in the list. This allows the operator who operates the operating device 11 to perceive that the processing program CP selected by the first selecting unit 124 has been interposed at the determined position in the list.

Then, the operating device 11 causes the firmware 1a3 of the dental processing machine 1 to erase the job list JL1 recorded in the dental processing machine 1 at the time when the currently executed processing program CP has been completed. Then, the processing program CP selected by the first selecting unit 124 is interposed at the determined position in the job list JL of the operating device 11. Then, the processing programs CP are sent to the dental processing machine 1 sequentially based on the job list JL of the operating device 11. This causes the job list JL1 of the dental processing machine 1 to be brought to a state in which the processing program CP selected by the first selecting unit 124 is interposed at the determined position in the list, like the job list JL of the operating device 11. Moreover, the status of each processing program CP in the job list JL1 of the dental processing machine 1 is made consistent with that in the job list JL of the operating device 11. Thus, the dental processing machine 1 starts processing of the processing program CP that is to be executed next after the processing program CP that is currently being executed, according to the rewritten job list JL1. Also, in the rewritten job list JL1, the processing program CP selected by the first selecting unit 124 is interposed at the determined position. As a result, the processing program CP selected by the first selecting unit 124 is executed by the dental processing machine 1 according to the desired order.

The process of the second interposing process unit 126 may be configured so that the just-described series of processes are executed by the control of the operating device 11. It should be noted that the process of the second interposing process unit 126 described herein is merely an illustrative example, and it may be executed by other procedures.

When the operating device 11 is provided with the second interposing process unit 126, the operating device 11 may further include a first display process unit 127. Here, the first display process unit 127 may be configured to cause a display to display a processing screen, for example, as illustrated in Fig. 9, that displays a plurality of processing programs CP contained in the job list JL and allows an operator to set in the order in which the processing program CP selected by the first selecting unit 124 is to be interposed. This enables the operator who operates the operating device 11 to set the position at which the selected processing program CP is to be interposed while visually checking the plurality of processing programs CP contained in the job list JL on the display. For example, in the job list JL displayed on the display, "select" buttons may be displayed between processing programs CP that have not yet been processed, for selecting the position for interposing the selected processing program CP. In this case, the operator manipulates the select button that is disposed at the position for interposing the selected processing program CP, so that the operator can set the position at which the processing program CP selected by the first selecting unit 124 is to be interposed. The process for setting the position for interposing the selected processing program CP is not limited to the method illustrated herein.

The first update process unit 128 may be configured to acquire the latest status of the dental processing machine 1. Specifically, there may be a time lag between the execution status of the processing program CP performed by the dental processing machine 1 and the execution status of the dental processing machine 1 acquired by the operating device 11. For example, assume that another processing program CP needs to be interposed after the currently-executed third one of the processing programs CP. In this case, it is possible to assume that, although the status acquired by the operating device 11 indicates that the third one of the processing programs CP is currently being executed, the dental processing machine 1 has already ended the third one of the processing programs CP and started the fourth one of the processing programs CP. As described above, the process of interposing a processing program CP in the job list JL1 of the dental processing machine 1 may be executed at permissible timing in the control by the firmware la3 of the dental processing machine 1. For this reason, the operating device 11 may be configured to acquire the latest status of the dental processing machine 1. Because such a first update process unit 128 is provided, the operating device 11 can obtain the latest status of the dental processing machine 1 at desired timing.

As illustrated in Fig. 1, the dental processing machine-operating system 10 may include the operating device 11, the dental processing machine 1 mutually data-communicably connected to the operating device 11, and the server 12 data-communicably connected to the operating device 11.

The server 12 may include, for example, a second list storage unit 141 and a second status management unit 142. The second list storage unit 141 may store a job list JL acquired from the operating device 11. The second status management unit 142 may be configured to acquire execution statuses of a plurality of processing programs CP contained in the job list JL through the operating device 11, and to record the execution statuses of the plurality of processing programs CP.

This enables the server 12 to record the execution statuses of the processing programs CP contained in the job list JL of the dental processing machine 1. In this case, the server 12 may be configured to provide the execution statuses of the processing programs CP contained in the job list JL to an external device 13 that is accessible to the server 12.

The server 12 may further include a second update process unit 143 for acquiring the latest status of the dental processing machine 1 through the operating device 11. In this case, the latest status of the dental processing machine 1 can be obtained by the server 12. In addition, the server 12 may be configured to provide the latest status of the dental processing machine 1 to the external device 13 that is accessible to the server 12.

Moreover, the operating system 10 may further include an external device 13 data-communicably connected to the server 12.

The external device 13 may include, for example, a third list storage unit 161, a third status management unit 162, a second selecting unit 163, and a third interposing process unit 164.

The third list storage unit 161 is configured to store a job list JL acquired through the server 12.

The third status management unit 162 is configured to acquire execution statuses of a plurality of processing programs CP contained in the job list JL through the server 12, and to record the execution statuses of the plurality of processing programs CP.

The second selecting unit 163 may be configured to select at least one of the processing programs CP from among the processing programs CP that are stored in the processing program storage unit 121 of the operating device 11 or the processing programs CP that are contained in the job list JL. The external device 13 may also include a recording unit 165 for recording information of the processing programs CP stored in the processing program storage unit 121 of the operating device 11, the information being acquired through the server 12, for example. The second selecting unit 163 may be configured to select at least one of the processing programs CP stored in the processing program storage unit 121, based on the information recorded in the recording unit 165. Also, the second selecting unit 163 may be configured to select one of the processing programs CP from among the processing programs CP contained in the job list JL that is stored in the third list storage unit 161 of the external device 13.

The third interposing process unit 164 is configured to interpose the processing program CP selected by the second selecting unit 163 into the job list JL next after one of the processing programs CP that is currently being executed by the dental processing machine 1. Such a third interposing process unit 164 is implemented by the external device 13 via the server 12, more specifically, via the server 12 and further via the operating device 11. The third interposing process unit 164 is configured to interpose the processing program CP selected by the second selecting unit 163 into the job list JL of the dental processing machine 1 next after the one of the processing programs CP that is currently being executed. The process of the third interposing process unit 164 can be implemented by a similar procedure to that of the first interposing process unit 125 of the operating device 11.

For example, at the time when the currently-executed processing program CP has been completed, the job list JL1 of the dental processing machine 1 may be rewritten so as to interpose the processing program CP selected by the second selecting unit 163 next after the processing program CP that has been completed. Then, the status shown in the rewritten job list JL1 of the dental processing machine 1 is made consistent with the state showing that the currently-executed processing program CP has been completed. This allows the firmware 1a3 of the dental processing machine 1 to execute the one of the processing programs CP that is interposed next after the processing program CP that has been completed. That is, the processing program CP selected by the second selecting unit 163 is executed subsequent to the completed processing program CP. It should be noted that the processing procedure of the third interposing process unit 164 is not limited to the just-described procedure.

Furthermore, the external device 13 may include a fourth interposing process unit 166 in addition to the third interposing process unit 164, or in place of the third interposing process unit 164. The fourth interposing process unit 166 is configured to interpose the processing program CP selected by the second selecting unit 163 at an arbitrary position in the job list JL other than the one of the processing programs CP that is currently being executed by the dental processing machine 1. The process of the fourth interposing process unit 166 can be implemented by a similar procedure to that of the second interposing process unit 126 of the operating device 11.

For example, the second selecting unit 163 may be configured to be able to set a position in the job list JL at which the selected processing program CP is to be interposed. It is desirable that, at the time when the currently executed processing program CP has been completed, the job list JL1 of the dental processing machine 1 be rewritten so that the processing program CP selected by the second selecting unit 163 is interposed at the determined position in the job list JL next after the completed processing program CP. Then, the status shown in the rewritten job list JL1 of the dental processing machine 1 is made consistent with the state showing that the currently-executed processing program CP has been completed. As a result, the firmware 1a3 of the dental processing machine 1 is allowed to execute the processing program CP selected by the second selecting unit 163 in a predetermined order according to the rewritten job list JL1. It should be noted that the processing procedure of the fourth interposing process unit 166 is not limited to the just-described procedure.

The external device 13 may also include a second display process unit 167 for causing a predetermined display to display a processing screen that displays a plurality of processing programs CP contained in the job list JL and allows an operator to set a position in the order at which the processing program CP selected by the second selecting unit 163 is interposed. The second display process unit 167 may be configured to, for example, display an operation button on the predetermined display, for the process of interposing the processing program CP.

In the examples shown in Figs. 9 and 10, for example, the display screen of the job list JL that is displayed on a predetermined display in the operating device 11 and the external device 13 is provided with an operation button a1 for executing an update process for obtaining the latest status of the dental processing machine 1. The just-mentioned display screen is also provided with an operation button a2 for executing the above-described process of interposing another processing program CP. The display screen is also provided with an operation button a3 for executing a skipping process, in which the currently executed processing program CP is terminated if an error is detected in the currently executed processing program CP, and another processing program CP that is to be executed next is started. The display screen is also provided with an operation button a4 for executing a reset process for bringing the dental processing machine 1 back to the initial state. Thus, the operating device 11 and the external device 13 may also be configured to display the job list JL on a predetermined display so as to be able to carry out an operation for executing the interposing process.

The external device 13 may further include a third update process unit 168 for acquiring the latest status of the dental processing machine 1 through the server 12. This enables the external device 13 to obtain the latest status of the dental processing machine 1. This makes it possible to interpose another processing program CP at an appropriate position according to the latest status of the dental processing machine 1.

Various embodiments of the dental processing machine-operating device, the dental processing machine-operating method and the dental processing machine-operating system proposed in this disclosure have been described hereinabove. It should be understood, however, that the dental processing machine-operating device, the dental processing machine-operating method and the dental processing machine-operating system proposed in this disclosure are not limited to the embodiments described above. Various modifications and alterations may be made to the embodiments of the dental processing machine-operating device, the dental processing machine-operating method and the dental processing machine-operating system proposed herein, within the scope of the present invention as defined by the appended claims.

### REFERENCE SIGNS LIST

- 1: Dental processing machine
- 10: Operating system
- 11: Operating device
- 12: Server
- 12a: Database (recording unit)
- 13: External device
- 21: CAM software-equipped device
- 21a: Milling file
- 22: CAD software-equipped device
- 22a: 3D model file
- 101: Processing program storage unit
- 102: Material data storage unit
- 103: Comment insertion process unit
- 104: Output process unit
- 121: Processing program storage unit
- 122: First list storage unit
- 123: First status recording unit
- 124: First selecting unit
- 125: First interposing process unit
- 126: Second interposing process unit
- 127: First display process unit
- 128: First update process unit
- 129: First communication unit
- 141: Second list storage unit
- 142: Second status management unit
- 143: Second update process unit
- 161: Third list storage unit
- 162: Third status management unit
- 163: Second selecting unit
- 164: Third interposing process unit
- 165: Recording unit
- 166: Fourth interposing process unit
- 167: Second display process unit
- 168: Third update process unit

## Claims

1. A dental processing machine-operating device (11) for operating a dental processing machine (1), the operating device (11) comprising:
a processing program storage unit (121) for storing a plurality of processing programs (CP) each specifying a processing procedure performed by the dental processing machine (1);
a first list storage unit (122) for storing a job list (JL) in which the plurality of processing programs (CP), each defining a processing procedure performed by the dental processing machine (1), are associated with an order in which the plurality of processing programs (CP) are to be executed; and
a first communication unit (129) for mutually communicating data between the operating device (11) and the dental processing machine (1);
**characterized by**
a first status recording unit (123) for acquiring, from the dental processing machine (1), execution statuses of the plurality of processing programs (CP) contained in the job list (JL), and recording the execution statuses of the plurality of processing programs (CP);
a first selecting unit (124) for selecting at least one of the plurality of processing programs (CP) from among the processing programs (CP) that are stored in the processing program storage unit (121) or the processing programs (CP) that are contained in the job list (JL); and
a first interposing process unit (125) for interposing the at least one processing program (CP) selected by the first selecting unit (124) into the job list (JL) next after one of the processing programs (CP) that is currently being executed by the dental processing machine (1), and in that
the dental processing machine (1) is configured to store the processing programs (CP1) sent from the operating device (11) which are the same as the processing programs (CP) stored in the processing program storage unit (121) and to store a job list (JL1) that specifies the order of the processing programs to be executed by the dental processing machine (1),
the dental processing machine (1) is configured to execute the processing programs sequentially according to the job list (JL1) stored therein, and
the operating device (11) is configured to cause the dental processing machine (1) to revise the job list (JL1) stored in the dental processing machine (1) so as to correspond to the job list (JL) stored in the first list storage unit (122) after the interposing operation by the first interposing process unit (125), wherein the revising of the job list (JL1) stored at the dental processing machine (1) is performed by erasing the job list (JL1) at the dental processing machine (1) once, then sequentially forwarding the information of each of the processing programs (CP) recorded in the job list (JL) at the operating device (11) and setting a status of the processing programs (CP) up to and including said one of the processing programs that was currently being executed to End, thereby creating a revised job list (JL1) at the dental processing machine (1) in accordance with the job list (JL) at the operation device (11), wherein the status of the processing programs (CP) up to and including said one that was currently being executed to End, the selected processing program is interposed and the following processing programs are moved by one position upwards in the revised job list (JL1).

2. A dental processing machine-operating device (11) for operating a dental processing machine (1), the operating device (11) comprising:
a processing program storage unit (121) for storing a plurality of processing programs (CP) each specifying a processing procedure performed by the dental processing machine (1);
a first list storage unit (122) for storing a job list (JL) in which the plurality of processing programs (CP), each defining a processing procedure performed by the dental processing machine (1), are associated with an order in which the plurality of processing programs (1) are to be executed; and
a first communication unit (129) for mutually communicating data between the operating device (11) and the dental processing machine (1);
**characterized by**
a first status recording unit (123) for acquiring, from the dental processing machine (1), execution statuses of the plurality of processing programs (CP) contained in the job list (JL), and recording the execution statuses of the plurality of processing programs (CP);
a first selecting unit (124) for selecting at least one of the plurality of processing programs (CP) from among the processing programs (CP) that are stored in the processing program storage unit (121) or the processing programs (CP) that are contained in the job list (JL); and
a second interposing process unit (126) for interposing the at least one processing program (CP) selected by the first selecting unit (124) at an arbitrary position in the job list (JL) other than one of the processing programs (CP) that is currently being executed by the dental processing machine (1), and in that
the dental processing machine (1) is configured to store the processing programs (CP1) sent from the operating device (11) which are the same as the processing programs (CP) stored in the processing program storage unit (121) and to store a job list (JL1) that specifies the order of the processing programs to be executed by the dental processing machine (1),
the dental processing machine (1) is configured to execute the processing programs sequentially according to the job list (JL1) stored therein, and
the operating device (11) is configured to cause the dental processing machine (1) to revise the job list (JL1) stored in the dental processing machine (1) so as to correspond to the job list (JL) stored in the first list storage unit (122) after the interposing operation by the second interposing process unit (126), wherein the revising of the job list (JL1) stored at the dental processing machine (1) is performed by erasing the job list (JL1) at the dental processing machine (1) at the time when the currently executed processing program (CP) has been completed, sending the processing programs (CP) to the dental processing machine (1) sequentially, based on the job list (JL) at the operating device (11) with the selected processing program being interposed, and creating a revised job list (JL1) at the dental processing machine (1), wherein the status of each processing program (CP) is made consistent with that in the job list (JL) at the operating device (11).

3. A dental processing machine-operating device (11) for operating a dental processing machine (1), the operating device (11) comprising:
a processing program storage unit (121) for storing a plurality of processing programs (CP) each specifying a processing procedure performed by the dental processing machine (1);
a first list storage unit (122) for storing a job list (JL) in which the plurality of processing programs (CP), each defining a processing procedure performed by the dental processing machine (1), are associated with an order in which the plurality of processing programs (CP) are to be executed; and
a first communication unit (129) for mutually communicating data between the operating device (11) and the dental processing machine (1);
**characterized by**
a first status recording unit (123) for acquiring, from the dental processing machine (1), execution statuses of the plurality of processing programs (CP) contained in the job list (JL), and recording the execution statuses of the plurality of processing programs (CP);
a first selecting unit (124) for selecting at least one of the plurality of processing programs (CP) from among the processing programs (CP) that are stored in the processing program storage unit (121) or the processing programs (CP) that are contained in the job list (JL); and
a first interposing process unit (125) for interposing the at least one processing program (CP) selected by the first selecting unit (124) into the job list (JL) next after one of the processing programs (CP) that is currently being executed by the dental processing machine (1), and in that
the dental processing machine (1) is configured to store the processing programs (CP1) sent from the operating device (11) which are the same as the processing programs (CP) stored in the processing program storage unit (121) and to store a job list (JL1) that specifies the order of the processing programs to be executed by the dental processing machine (1),
the dental processing machine (1) is configured to execute the processing programs sequentially according to the job list (JL1) stored therein, and
the operating device (11) is configured to cause the dental processing machine (1) to revise the job list (JL1) stored in the dental processing machine (1) so as to correspond to the job list (JL) stored in the first list storage unit (122) after the interposing operation by the first interposing process unit (125), wherein the revising the job list (JL1) stored in the dental processing machine (1) is performed at the time when the one of the processing programs (CP) that is currently being executed by the dental processing machine (1) is completed, by moving the processing programs (CP) following in the job list (JL1) after said one of the processing programs (CP) to the respective next position and interposing the selected processing program (CP) at the position immediately following that of said one program.

4. The dental processing machine-operating device (11) according to claim 2, further comprising a first display process unit (127) for causing a display device to display a processing screen that displays a plurality of processing programs (CP) contained in the job list (JL) and allows an operator to set a position in the order at which the at least one of the processing programs (CP) selected by the first selecting unit (124) is interposed.

5. The dental processing machine-operating device (11) according to any one of claims 1 to 4, further comprising a first update process unit (128) for acquiring a latest status of the dental processing machine (1).

6. A dental processing machine-operating system (10) comprising:
an operating device (11) according to any one of claims 1 to 5;
a dental processing machine (1), mutually data-communicably connected to the operating device (11);
a server (12), data-communicably connected to the operating device (11),
the server (12) comprising:
a second list storage unit (141) for storing the job list (JL) acquired from the operating device (11); and
a second status management unit (142) for acquiring execution statuses of a plurality of processing programs (CP) contained in the job list (JL) through the operating device (11) and recording the execution statuses of the plurality of processing programs (CP).

7. The dental processing machine-operating system (10) according to claim 6, further comprising a second update process unit (143) for acquiring a latest status of the dental processing machine (1) through the operating device (11).

8. The dental processing machine-operating system (10) according to claim 7, further comprising:
an external device (13), data-communicably connected to the server (12), and wherein
the external device (13) comprises:
a third list storage unit (161) for storing the job list (JL) acquired from the server (12);
a third status management unit (162) for acquiring execution statuses of a plurality of processing programs (CP) contained in the job list (JL) through the server (12) and recording the execution statuses of the plurality of processing programs (CP);
a second selecting unit (163) for selecting at least one of the plurality of processing programs (CP) from among the processing programs (CP) stored in the processing program storage unit (121) or the processing programs that are contained in the job list (JL); and
a third interposing process unit (164) for interposing the at least one processing program (CP) selected by the second selecting unit (163) into the job list (JL) next after one of the processing programs (CP) that is currently being executed by the dental processing machine (1).

9. The dental processing machine-operating system (10) according to claim 7, further comprising:
an external device (13), data-communicably connected to the server (12), and wherein
the external device (13) comprises:
a third list storage unit (161) for storing the job list (JL) acquired from the server (12);
a third status management unit (162) for acquiring execution statuses of a plurality of processing programs (CP) contained in the job list (JL) through the server (12) and recording the execution statuses of the plurality of processing programs (CP);
a second selecting unit (163) for selecting at least one of the plurality of processing programs (CP) from among the processing programs (CP) stored in the processing program storage unit (121) or the processing programs (CP) that are contained in the job list (JL); and
a fourth interposing process unit (166) for interposing the at least one processing program (CP) selected by the second selecting unit (163) at an arbitrary position in the job list (JL) other than one of the processing programs (CP) that is currently being executed by the dental processing machine (1).

10. The dental processing machine-operating system (10) according to claim 9, further comprising a second display process unit (167) for causing a display device to display a processing screen that displays a plurality of processing programs (CP) contained in the job list (JL) and allows an operator to set a position in the order at which the at least one of the processing programs (CP) selected by the second selecting unit (163) is interposed.

11. The dental processing machine-operating system (10) according to any one of claims 8 to 10, further comprising a third update process unit (168) for acquiring a latest status of the dental processing machine (1) through the server (12).

12. A dental processing machine-operating method for operating a dental processing machine (1), the operating method comprising the steps:
storing in a processing program storage unit (121) of an operating device (11) a plurality of processing programs (CP) each specifying a processing procedure performed by the dental processing machine (1);
storing, in the operating device (11), a job list (JL) in which the plurality of processing programs (CP), each defining a processing procedure performed by the dental processing machine (1), are associated with an order in which the plurality of processing programs (CP) are to be executed; and
mutually communicating data between the operating device (11) and the dental processing machine (1);
**characterized by** further comprising the steps of
acquiring, from the dental processing machine (1), execution statuses of the plurality of processing programs (CP) contained in the job list (JL), and recording the execution statuses of the plurality of processing programs (CP);
selecting at least one of the plurality of processing programs (CP) from among the processing programs (CP) that are stored in the processing program storage unit (121) or the processing programs (CP) that are contained in the job list (JL);
interposing the at least one selected processing program (CP) into the job list (JL) next after one of the processing programs (CP) that is currently being executed by the dental processing machine (1),
storing, in the dental processing machine (1), the processing programs (CP1) sent from the operating device (11) which are the same as the processing programs (CP) stored in the processing program storage unit (121) and storing, in the dental processing machine (1), a job list (JL1) that specifies the order of the processing programs to be executed by the dental processing machine (1),
the dental processing machine (1) executing the processing programs sequentially according to the job list (JL1) stored in the dental processing machine (1), and
the operating device (11) causing the dental processing machine (1) to revise the job list (JL1) stored in the dental processing machine (1) so as to correspond to the job list (JL) stored in the operating device (11) after the interposing operation, wherein the revising of the job list (JL1) stored at the dental processing machine (1) is performed by erasing the job list (JL1) at the dental processing machine (1) once, then sequentially forwarding the information of each of the processing programs (CP) recorded in the job list (JL) at the operating device (11) and setting a status of the processing programs (CP) up to and including said one of the processing programs that was currently being executed to End, thereby creating a revised job list (JL1) at the dental processing machine (1) in accordance with the job list (JL) at the operation device (11), wherein the status of the processing programs (CP) up to and including said one that was currently being executed to End, the selected processing program is interposed and the following processing programs are moved by one position upwards in the revised job list (JL1)..

13. A dental processing machine-operating method for operating a dental processing machine (1), the operating method comprising the steps:
storing in a processing program storage unit (121) of an operating device (11) a plurality of processing programs (CP) each specifying a processing procedure performed by the dental processing machine (1);
storing a job list (JL), in the operating device (11), in which the plurality of processing programs (CP), each defining a processing procedure performed by the dental processing machine (1), are associated with an order in which the plurality of processing programs (CP) are to be executed; and
mutually communicating data between the operating device (11) and the dental processing machine (1);
**characterized by** further comprising the steps of
acquiring, from the dental processing machine (1), execution statuses of the plurality of processing programs (CP) contained in the job list (JL), and recording the execution statuses of the plurality of processing programs (CP);
selecting at least one of the plurality of processing programs (CP) from among the processing programs (CP) that are stored in the processing program storage unit (121) or the processing programs (CP) that are contained in the job list (JL);
interposing the at least one selected processing program (CP) at an arbitrary position in the job list (JL) other than one of the processing programs (CP) that is currently being executed by the dental processing machine (1),
storing, in the dental processing machine (1), the processing programs (CP1) sent from the operating device (11) which are the same as the processing programs (CP) stored in the processing program storage unit (121) and storing, in the dental processing machine (1), a job list (JL1) that specifies the order of the processing programs to be executed by the dental processing machine (1),
the dental processing machine (1) executing the processing programs sequentially according to the job list (JL1) stored in the dental processing machine (1), and
the operating device (11) causing the dental processing machine (1) to revise the job list (JL1) stored in the dental processing machine (1) so as to correspond to the job list (JL) stored in the operating device (11) after the interposing operation, wherein the revising of the job list (JL1) stored at the dental processing machine (1) is performed by erasing the job list (JL1) at the dental processing machine (1) at the time when the currently executed processing program (CP) has been completed, sending the processing programs (CP) to the dental processing machine (1) sequentially, based on the job list (JL) at the operating device (11) with the selected processing program being interposed, and creating a revised job list (JL1) at the dental processing machine (1), wherein the status of each processing program (CP) is made consistent with that in the job list (JL) at the operating device (11).

14. A dental processing machine-operating method for operating a dental processing machine (1), the operating method comprising the steps:
storing in a processing program storage unit (121) of an operating device (11) a plurality of processing programs (CP) each specifying a processing procedure performed by the dental processing machine (1);
storing, in the operating device (11), a job list (JL) in which the plurality of processing programs (CP), each defining a processing procedure performed by the dental processing machine (1), are associated with an order in which the plurality of processing programs (CP) are to be executed; and
mutually communicating data between the operating device (11) and the dental processing machine (1);
**characterized by** further comprising the steps of
acquiring, from the dental processing machine (1), execution statuses of the plurality of processing programs (CP) contained in the job list (JL), and recording the execution statuses of the plurality of processing programs (CP);
selecting at least one of the plurality of processing programs (CP) from among the processing programs (CP) that are stored in the processing program storage unit (121) or the processing programs (CP) that are contained in the job list (JL);
interposing the at least one selected processing program (CP) into the job list (JL) next after one of the processing programs (CP) that is currently being executed by the dental processing machine (1),
storing, in the dental processing machine (1), the processing programs (CP1) sent from the operating device (11) which are the same as the processing programs (CP) stored in the processing program storage unit (121) and storing, in the dental processing machine (1), a job list (JL1) that specifies the order of the processing programs to be executed by the dental processing machine (1),
the dental processing machine (1) executing the processing programs sequentially according to the job list (JL1) stored in the dental processing machine (1), and
the operating device (11) causing the dental processing machine (1) to revise the job list (JL1) stored in the dental processing machine (1) so as to correspond to the job list (JL) stored in the operating device (11) after the interposing operation, wherein the revising the job list (JL1) stored in the dental processing machine (1) is performed at the time when the one of the processing programs (CP) that is currently being executed by the dental processing machine (1) is completed, by moving the processing programs (CP) following in the job list (JL1) after said one of the processing programs (CP) to the respective next position and interposing the selected processing program (CP) at the position immediately following that of said one program.

## Patentansprüche

1. Vorrichtung (11) zum Betreiben einer Dental-Bearbeitungsmaschine, mit der eine Dental-Bearbeitungsmaschine (1) betrieben wird, wobei die Vorrichtung (11) zum Betreiben umfasst:
eine Einheit (121) für Speicherung von Bearbeitungsprogrammen zum Speichern einer Vielzahl von Bearbeitungsprogrammen (CP), die jeweils einen von der Dental-Bearbeitungsmaschine (1) durchgeführten Bearbeitungsvorgang vorgeben;
eine erste Einheit (122) für Speicherung von Listen zum Speichern einer Auftragsliste (JL), in der die Vielzahl von Bearbeitungsprogrammen (CP), die jeweils einen von der Dental-Bearbeitungsmaschine (1) durchgeführten Bearbeitungsvorgang definieren, mit einer Reihenfolge verknüpft sind, in der die Vielzahl von Bearbeitungsprogrammen (CP) auszuführen sind; sowie
eine erste Kommunikations-Einheit (129) zum wechselseitigen Übertragen von Daten zwischen der Vorrichtung (11) zum Betreiben und der Dental-Bearbeitungsmaschine (1);
**gekennzeichnet durch**
eine erste Einheit (123) zum Aufzeichnen von Status, mit der von der Dental-Bearbeitungsmaschine (1) Ausführungs-Status der in der Auftragsliste (JL) enthaltenen Vielzahl von Bearbeitungs-programmen (CP) bezogen werden und die Ausführungs-Status der Vielzahl von Bearbeitungsprogrammen (CP) aufgezeichnet werden;
eine erste Auswähl-Einheit (124) zum Auswählen wenigstens eines der Vielzahl von Bearbeitungsprogrammen (CP) aus den Bearbeitungsprogrammen (CP), die in der Einheit (121) für Speicherung von Bearbeitungsprogrammen gespeichert sind, oder den Bearbeitungsprogrammen (CP), die in der Auftragsliste (JL) enthalten sind; sowie
eine erste Einfüge-Prozesseinheit (125), mit der das wenigstens eine von der ersten Auswähl-Einheit (124) ausgewählte Bearbeitungsprogramm (CP) in die Auftragsliste (JL) unmittelbar nach einem der Bearbeitungsprogramme (CP) eingefügt wird, das aktuell von der Dental-Bearbeitungsmaschine (1) ausgeführt wird, und **dadurch, dass**
die Dental-Bearbeitungsmaschine (1) so konfiguriert ist, dass sie die von der Vorrichtung (11) zum Betreiben gesendeten Bearbeitungsprogramme (CP1) speichert, die die gleichen sind wie die in der Einheit (121) für Speicherung von Bearbeitungsprogrammen gespeicherten Bearbeitungsprogramme (CP), und eine Auftragsliste (JL1) speichert, die die Reihenfolge der von der Dental-Bearbeitungsmaschine (1) auszuführenden Bearbeitungsprogramme vorgibt,
die Dental-Bearbeitungsmaschine (1) so konfiguriert ist, dass sie die Bearbeitungsprogramme sequenziell entsprechend der darin gespeicherten Auftragsliste (JL1) ausführt, und
die Vorrichtung (11) zum Betreiben so ausgeführt ist, dass sie die Dental-Bearbeitungsmaschine (1) veranlasst, die an der Dental-Bearbeitungsmaschine (1) gespeicherte Auftragsliste (JL1) so zu revidieren, dass sie der in der ersten Einheit (122) für Speicherung von Listen gespeicherten Auftragsliste (JL) nach dem Vorgang zum Einfügen durch die erste Einfüge-Prozesseinheit (125) entspricht, wobei das Revidieren der an der Dental-Bearbeitungsmaschine (1) gespeicherten Auftragsliste (JL1) durchgeführt wird, indem die Auftragsliste (JL1) an der Dental-Bearbeitungsmaschine (1) einmal gelöscht wird, dann sequenziell die Informationen jedes der in der Auftragsliste (JL) an der Vorrichtung (11) zum Betreiben gespeicherten Bearbeitungsprogramme (CP) weitergeleitet werden und ein Status der Bearbeitungsprogramme (CP) bis einschließlich desjenigen der Bearbeitungsprogramme, das aktuell ausgeführt wurde, auf "Ende" gesetzt wird, wodurch eine revidierte Auftragsliste (JL1) an der Dental-Bearbeitungsmaschine (1) entsprechend der Auftragsliste (JL) an der Vorrichtung (11) zum Betreiben erstellt wird, wobei der Status der Bearbeitungsprogramme (CP) bis einschließlich desjenigen, das aktuell ausgeführt wurde, auf "Ende" gesetzt wird, das ausgewählte Bearbeitungsprogramm eingefügt wird und die folgenden Bearbeitungsprogramme in der revidierten Auftragsliste (JL1) um eine Position nach oben verschoben werden.

2. Vorrichtung (11) zum Betreiben einer Dental-Bearbeitungsmaschine, mit der eine Dental-Bearbeitungsmaschine (1) betrieben wird, wobei die Vorrichtung (11) zum Betreiben umfasst:
eine Einheit (121) für Speicherung von Bearbeitungsprogrammen zum Speichern einer Vielzahl von Bearbeitungsprogrammen (CP), die jeweils einen von der Dental-Bearbeitungsmaschine (1) durchgeführten Bearbeitungsvorgang vorgeben;
eine erste Einheit (122) für Speicherung von Listen zum Speichern einer Auftragsliste (JL), in der die Vielzahl von Bearbeitungsprogrammen (CP), die jeweils einen von der Dental-Bearbeitungsmaschine (1) durchgeführten Bearbeitungsvorgang definieren, mit einer Reihenfolge verknüpft sind, in der die Vielzahl von Bearbeitungsprogrammen (CP) auszuführen sind; und
eine erste Kommunikations-Einheit (129) zum wechselseitigen Übertragen von Daten zwischen der Vorrichtung (11) zum Betreiben und der Dental-Bearbeitungsmaschine (1);
**gekennzeichnet durch**
eine erste Einheit (123) zum Aufzeichnen von Status, mit der von der Dental-Bearbeitungsmaschine (1) Ausführungs-Status der in der Auftragsliste (JL) enthaltenen Vielzahl von Bearbeitungs-programmen (CP) bezogen werden und die Ausführungs-Status der Vielzahl von Bearbeitungsprogrammen (CP) aufgezeichnet werden;
eine erste Auswähl-Einheit (124) zum Auswählen wenigstens eines der Vielzahl von Bearbeitungsprogrammen (CP) aus den Bearbeitungsprogrammen, die in der Einheit (121) für Speicherung von Bearbeitungsprogrammen (CP) gespeichert sind, oder den Bearbeitungsprogrammen (CP), die in der Auftragsliste (JL) enthalten sind; sowie
eine zweite Einfüge-Prozesseinheit (126), mit der das wenigstens eine von der ersten Auswähl-Einheit (124) ausgewählte Bearbeitungsprogramm (CP) an einer beliebigen anderen Position in der Auftragsliste (JL) als derjenigen eines der Bearbeitungsprogramme (CP) eingefügt wird, das aktuell von der Dental-Bearbeitungsmaschine (1) ausgeführt wird, und **dadurch, dass**
die Dental-Bearbeitungsmaschine (1) so konfiguriert ist, dass sie die von der Vorrichtung (11) zum Betreiben gesendeten Bearbeitungsprogramme (CP1) speichert, die die gleichen sind wie die in der Einheit (121) für Speicherung von Bearbeitungsprogrammen gespeicherten Bearbeitungsprogramme (CP), und eine Auftragsliste (JL1) speichert, die die Reihenfolge der von der Dental-Bearbeitungsmaschine (1) auszuführenden Bearbeitungsprogramme vorgibt,
die Dental-Bearbeitungsmaschine (1) so konfiguriert ist, dass sie die Bearbeitungsprogramme sequenziell entsprechend der darin gespeicherten Auftragsliste (JL1) ausführt, und
die Vorrichtung (11) zum Betreiben so konfiguriert ist, dass sie die Dental-Bearbeitungsmaschine (1) veranlasst, die an der Dental-Bearbeitungsmaschine (1) gespeicherte Auftragsliste (JL1) so zu revidieren, dass sie der in der ersten Einheit (122) für Speicherung von Listen gespeicherten Auftragsliste (JL) nach dem Vorgang zum Einfügen durch die zweite Einfüge-Prozesseinheit (126) entspricht, wobei das Revidieren der an der Dental-Bearbeitungsmaschine (1) gespeicherten Auftragsliste (JL1) durchgeführt wird, indem die Auftragsliste (JL1) an der Dental-Bearbeitungsmaschine (1) zu dem Zeitpunkt gelöscht wird, zu dem das aktuell ausgeführte Bearbeitungsprogramm (CP) abgeschlossen worden ist, die Bearbeitungsprogramme (CP) auf Basis der Auftragsliste (JL) an der Vorrichtung (11) zum Betreiben mit dem eingefügten ausgewählten Bearbeitungsprogramm sequenziell zu der Dental-Bearbeitungsmaschine gesendet werden und eine revidierte Auftragsliste (JL1) an der Dental-Bearbeitungsmaschine (1) erstellt wird, wobei der Status jedes Bearbeitungsprogramms (CP) mit demjenigen in der Auftragsliste (JL) an der Vorrichtung (11) zum Betreiben in Übereinstimmung gebracht wird.

3. Vorrichtung (11) zum Betreiben einer Dental-Bearbeitungsmaschine, mit der eine Dental-Bearbeitungsmaschine (1) betrieben wird, wobei die Vorrichtung (11) zum Betreiben umfasst:
eine Einheit (121) für Speicherung von Bearbeitungsprogrammen zum Speichern einer Vielzahl von Bearbeitungsprogrammen (CP), die jeweils einen von der Dental-Bearbeitungsmaschine (1) durchgeführten Bearbeitungsvorgang vorgeben;
eine erste Einheit (122) für Speicherung von Listen zum Speichern einer Auftragsliste (JL), in der die Vielzahl von Bearbeitungsprogrammen (CP), die jeweils einen von der Dental-Bearbeitungsmaschine (1) durchgeführten Bearbeitungsvorgang definieren, mit einer Reihenfolge verknüpft sind, in der die Vielzahl von Bearbeitungsprogrammen (CP) auszuführen sind; und
eine erste Kommunikations-Einheit (129) zum wechselseitigen Übertragen von Daten zwischen der Vorrichtung (11) zum Betreiben und der Dental-Bearbeitungsmaschine (1);
**gekennzeichnet durch**
eine erste Einheit (123) zum Aufzeichnen von Status, mit der von der Dental-Bearbeitungsmaschine (1) Ausführungs-Status der in der Auftragsliste (JL) enthaltenen Vielzahl von Bearbeitungs-programmen (CP) bezogen werden und die Ausführungs-Status der Vielzahl von Bearbeitungsprogrammen (CP) aufgezeichnet werden;
eine erste Auswähl-Einheit (124) zum Auswählen wenigstens eines der Vielzahl von Bearbeitungsprogrammen (CP) aus den Bearbeitungsprogrammen (CP), die in der Einheit (121) für Speicherung von Bearbeitungsprogrammen gespeichert sind, oder den Bearbeitungsprogrammen (CP), die in der Auftragsliste (JL) enthalten sind; sowie
eine erste Einfüge-Prozesseinheit (125), mit der das wenigstens eine von der ersten Auswähl-Einheit (124) ausgewählte Bearbeitungsprogramm (CP) in die Auftragsliste (JL) unmittelbar nach einem der Bearbeitungsprogramme (CP) eingefügt wird, das aktuell von der Dental-Bearbeitungsmaschine (1) ausgeführt wird, und **dadurch, dass**
die Dental-Bearbeitungsmaschine (1) so konfiguriert ist, dass sie die von der Vorrichtung (11) zum Betreiben gesendeten Bearbeitungsprogramme (CP1) speichert, die die gleichen sind wie die in der Einheit (121) für Speicherung von Bearbeitungsprogrammen gespeicherten Bearbeitungsprogramme (CP), und eine Auftragsliste (JL1) speichert, die die Reihenfolge der von der Dental-Bearbeitungsmaschine (1) auszuführenden Bearbeitungsprogramme vorgibt,
die Dental-Bearbeitungsmaschine (1) so konfiguriert ist, dass sie die Bearbeitungsprogramme sequenziell entsprechend der darin gespeicherten Auftragsliste (JL1) ausführt, und
die Vorrichtung (11) zum Betreiben so konfiguriert ist, dass sie die Dental-Bearbeitungsmaschine (1) veranlasst, die in der Dental-Bearbeitungsmaschine (1) gespeicherte Auftragsliste (JL1) so zu revidieren, dass sie der in der ersten Einheit (122) für Speicherung von Listen gespeicherten Auftragsliste (JL) nach dem Vorgang zum Einfügen durch die erste Einfüge-Prozesseinheit (125) entspricht, wobei das Revidieren der in der Dental-Bearbeitungsmaschine (1) gespeicherten Auftragsliste (JL1) zu dem Zeitpunkt durchgeführt wird, zu dem das eine der Bearbeitungsprogramme (CP), das aktuell von der Dental-Bearbeitungsmaschine (1) ausgeführt wird, abgeschlossen wird, indem die in der Auftragsliste (JL1) nach dem einen der Bearbeitungsprogramme (CP) folgenden Bearbeitungsprogramme (CP) an die jeweils nächste Position verschoben werden und das ausgewählte Bearbeitungsprogramm (CP) an der unmittelbar auf die des einen Programms folgenden Position eingefügt wird.

4. Vorrichtung (11) zum Betreiben einer Dental-Bearbeitungsmaschine nach Anspruch 2, die des Weiteren eine erste Anzeige-Prozesseinheit (127) umfasst, mit der eine Anzeigevorrichtung veranlasst wird, einen Bearbeitungs-Bildschirm anzuzeigen, der eine Vielzahl in der Auftragsliste (JL) enthaltener Bearbeitungsprogramme (CP) anzeigt und es einer Bedienungsperson ermöglicht, eine Position in der Reihenfolge festzulegen, an der das wenigstens eine von der ersten Auswähl-Einheit (124) ausgewählte der Bearbeitungsprogramme (CP) eingefügt wird.

5. Vorrichtung (11) zum Betreiben einer Dental-Bearbeitungsmaschine nach einem der Ansprüche 1 bis 4, die des Weiteren eine erste Aktualisierungs-Prozesseinheit (128) zum Erfassen eines aktuellsten Status der Dental-Bearbeitungsmaschine (1) umfasst.

6. System (10) zum Betreiben einer Dental-Bearbeitungsmaschine, umfassend:
eine Vorrichtung (11) zum Betreiben nach einem der Ansprüche 1 bis 5;
eine Dental-Bearbeitungsmaschine (1), die mit der Vorrichtung (11) zum Betreiben in Verbindung zum wechselseitigen Übertragen von Daten steht;
einen Server (12), der in Datenübertragungs-Verbindung mit der Vorrichtung (11) zum Betreiben steht,
wobei der Server (12) umfasst:
eine zweite Einheit (141) für Speicherung von Listen zum Speichern der von der Vorrichtung (11) zum Betreiben bezogenen Auftragsliste (JL); und
eine zweite Einheit (142) für Status-Verwaltung, mit der Ausführungs-Status einer Vielzahl in der Auftragsliste (JL) enthaltener Bearbeitungsprogramme (CP) über die Vorrichtung (11) zum Betreiben bezogen werden und die Ausführungs-Status der Vielzahl von Bearbeitungsprogrammen (CP) aufgezeichnet werden.

7. System (10) zum Betreiben einer Dental-Bearbeitungsmaschine nach Anspruch 6, das des Weiteren eine zweite Aktualisierungs-Prozesseinheit (143) umfasst, mit der ein aktuellster Status der Dental-Bearbeitungsmaschine (1) über die Vorrichtung (11) zum Betreiben bezogen wird.

8. System (10) zum Betreiben einer Dental-Bearbeitungsmaschine nach Anspruch 7, das des Weiteren umfasst:
eine externe Vorrichtung (13), die in Datenübertragungs-Verbindung mit dem Server (12) steht, und wobei
die externe Vorrichtung (13) umfasst:
eine dritte Einheit (161) für Speicherung von Listen zum Speichern der von dem Server (12) bezogenen Auftragsliste (JL);
eine dritte Einheit (162) für Status-Verwaltung, mit der Ausführungs-Status einer Vielzahl in der Auftragsliste (JL) enthaltener Bearbeitungsprogramme (CP) über den Server (12) bezogen werden und die Ausführungs-Status der Vielzahl von Bearbeitungsprogrammen (CP) aufgezeichnet werden;
eine zweite Auswähl-Einheit (163) zum Auswählen wenigstens eines der Vielzahl von Bearbeitungsprogrammen (CP) aus den in der Einheit (121) für Speicherung von Bearbeitungsprogrammen gespeicherten Bearbeitungsprogrammen (CP) oder den Bearbeitungsprogrammen, die in der Auftragsliste (JL) enthalten sind; sowie
eine dritte Einfüge-Prozesseinheit (164), mit der das wenigstens eine von der zweiten Auswähl-Einheit (163) ausgewählte Bearbeitungsprogramm (CP) in die Auftragsliste (JL) unmittelbar nach einem der Bearbeitungsprogramme (CP) eingefügt wird, das aktuell von der Dental-Bearbeitungsmaschine (1) ausgeführt wird.

9. System (10) zum Betreiben einer Dental-Bearbeitungsmaschine nach Anspruch 7, das des Weiteren umfasst:
eine externe Vorrichtung (13), die in Datenübertragungs-Verbindung mit dem Server (12) steht, und wobei
die externe Vorrichtung (13) umfasst:
eine dritte Einheit (161) für Speicherung von Listen zum Speichern der von dem Server (12) bezogenen Auftragsliste (JL);
eine dritte Einheit (162) für Status-Verwaltung, mit der Ausführungs-Status einer Vielzahl in der Auftragsliste (JL) enthaltener Bearbeitungsprogramme (CP) über den Server (12) bezogen werden und die Ausführungs-Status der Vielzahl von Bearbeitungsprogrammen (CP) aufgezeichnet werden;
eine zweite Auswähl-Einheit (163) zum Auswählen wenigstens eines der Vielzahl von Bearbeitungsprogrammen (CP) aus den in der Einheit (121) für Speicherung von Bearbeitungsprogrammen gespeicherten Bearbeitungsprogrammen (CP) oder den Bearbeitungsprogrammen (CP), die in der Auftragsliste (JL) enthalten sind; sowie
eine vierte Einfüge-Prozesseinheit (166), mit der das wenigstens eine von der zweiten Auswähl-Einheit (163) ausgewählte Bearbeitungsprogramm (CP) an einer beliebigen anderen Position in der Auftragsliste (JL) als derjenigen eines der Bearbeitungsprogramme (CP) eingefügt wird, das aktuell von der Dental-Bearbeitungsmaschine (1) ausgeführt wird.

10. System (10) zum Betreiben einer Dental-Bearbeitungsmaschine nach Anspruch 9, das des Weiteren eine zweite Anzeige-Prozesseinheit (167) umfasst, mit der eine Anzeigevorrichtung veranlasst wird, einen Bearbeitungs-Bildschirm anzuzeigen, der eine Vielzahl in der Auftragsliste (JL) enthaltener Bearbeitungsprogramme (CP) anzeigt und es einer Bedienungsperson ermöglicht, eine Position in der Reihenfolge festzulegen, an der das wenigstens eine von der zweiten Auswähl-Einheit (163) ausgewählte der Bearbeitungsprogramme (CP) eingefügt wird.

11. System (10) zum Betreiben einer Dental-Bearbeitungsmaschine nach einem der Ansprüche 8 bis 10, die des Weiteren eine dritte Aktualisierungs-Prozesseinheit (168) umfasst, mit der ein aktuellster Status der Dental-Bearbeitungsmaschine (1) über den Server (12) bezogen wird.

12. Verfahren zum Betreiben einer Dental-Bearbeitungsmaschine (1), mit dem eine Dental-Bearbeitungsmaschine betrieben wird, wobei das Verfahren die folgenden Schritte umfasst:
Speichern einer Vielzahl von Bearbeitungsprogrammen (CP), die jeweils einen von der Dental-Bearbeitungsmaschine (1) durchgeführten Bearbeitungsvorgang vorgeben, in einer Einheit (121) für Speicherung von Bearbeitungsprogrammen einer Vorrichtung (11) zum Betreiben;
Speichern einer Auftragsliste (JL), in der die Vielzahl von Bearbeitungsprogrammen (CP), die jeweils einen von der Dental-Bearbeitungsmaschine (1) durchgeführten Bearbeitungsvorgang definieren, mit einer Reihenfolge verknüpft sind, in der die Vielzahl von Bearbeitungsprogrammen (CP) auszuführen sind, in der Vorrichtung (11) zum Betreiben; und
wechselseitiges Übertragen von Daten zwischen der Vorrichtung (11) zum Betreiben und der Dental-Bearbeitungsmaschine (1);
**dadurch gekennzeichnet, dass** es des Weiteren die folgenden Schritte umfasst:
Beziehen von Ausführungs-Status der in der Auftragsliste (JL) enthaltenen Vielzahl von Bearbeitungsprogrammen (CP) und Aufzeichnen der Ausführungs-Status der Vielzahl von Bearbeitungsprogrammen (CP);
Auswählen wenigstens eines der Vielzahl von Bearbeitungsprogrammen (CP) aus den Bearbeitungsprogrammen (CP), die in der Einheit (121) für Speicherung von Bearbeitungsprogrammen gespeichert sind, oder den Bearbeitungsprogrammen (CP), die in der Auftragsliste (JL) enthalten sind;
Einfügen des wenigstens einen ausgewählten Bearbeitungsprogramms (CP) in die Auftragsliste (JL) unmittelbar nach einem der Bearbeitungsprogramme (CP), das aktuell von der Dental-Bearbeitungsmaschine (1) ausgeführt wird,
Speichern der von der Vorrichtung (11) zum Betreiben gesendeten Bearbeitungsprogramme (CP1), die die gleichen sind wie die in der Einheit (121) für Speicherung von Bearbeitungsprogrammen gespeicherten Bearbeitungsprogramme (CP), in der Dental-Bearbeitungsmaschine (1) und Speichern einer Auftragsliste (JL1), die die Reihenfolge der von der Dental-Bearbeitungsmaschine (1) auszuführenden Bearbeitungsprogramme vorgibt, in der Dental-Bearbeitungsmaschine (1)
Ausführen der Bearbeitungsprogramme sequenziell entsprechend der in der Dental-Bearbeitungsmaschine (1) gespeicherten Auftragsliste (JL1) durch die Dental-Bearbeitungsmaschine (1), und
Veranlassen, dass die Dental-Bearbeitungsmaschine (1) die in der Dental-Bearbeitungsmaschine (1) gespeicherte Auftragsliste (JL1) so revidiert, dass sie der in der Vorrichtung (11) zum Betreiben gespeicherten Auftragsliste (JL) nach dem Vorgang zum Einfügen entspricht, durch die Vorrichtung (11) zum Betreiben, wobei das Revidieren der an der Dental-Bearbeitungsmaschine (1) gespeicherten Auftragsliste (JL1) durchgeführt wird, indem die Auftragsliste (JL1) an der Dental-Bearbeitungsmaschine (1) einmal gelöscht wird, dann sequenziell die Informationen jedes der in der Auftragsliste (JL) an der Vorrichtung (11) zum Betreiben gespeicherten Bearbeitungsprogramme (CP) weitergeleitet werden und ein Status der Bearbeitungsprogramme (CP) bis einschließlich desjenigen der Bearbeitungsprogramme, das aktuell ausgeführt wurde, auf "Ende" gesetzt wird, wodurch eine revidierte Auftragsliste (JL1) an der Dental-Bearbeitungsmaschine (1) entsprechend der Auftragsliste (JL) an der Vorrichtung (11) zum Betreiben erstellt wird, wobei der Status der Bearbeitungsprogramme (CP) bis einschließlich desjenigen, das aktuell ausgeführt wurde, auf "Ende" gesetzt wird, das ausgewählte Bearbeitungsprogramm eingefügt wird und die folgenden Bearbeitungsprogramme in der revidierten Auftragsliste (JL1) um eine Position nach oben verschoben werden.

13. Verfahren zum Betreiben einer Dental-Bearbeitungsmaschine (1), mit dem eine Dental-Bearbeitungsmaschine betrieben wird, wobei das Verfahren die folgenden Schritte umfasst:
Speichern einer Vielzahl von Bearbeitungsprogrammen (CP), die jeweils einen von der Dental-Bearbeitungsmaschine (1) durchgeführten Bearbeitungsvorgang vorgeben, in einer Einheit (121) für Speicherung von Bearbeitungsprogrammen einer Vorrichtung (11) zum Betreiben;
Speichern einer Auftragsliste (JL), in der die Vielzahl von Bearbeitungsprogrammen (CP), die jeweils einen von der Dental-Bearbeitungsmaschine (1) durchgeführten Bearbeitungsvorgang definieren, mit einer Reihenfolge verknüpft sind, in der die Vielzahl von Bearbeitungsprogrammen (CP) auszuführen sind, in der Vorrichtung (11) zum Betreiben; und
wechselseitiges Übertragen von Daten zwischen der Vorrichtung (11) zum Betreiben und der Dental-Bearbeitungsmaschine (1);
**dadurch gekennzeichnet, dass** es des Weiteren die folgenden Schritte umfasst:
Beziehen von Ausführungs-Status der in der Auftragsliste (JL) enthaltenen Vielzahl von Bearbeitungsprogrammen (CP) von der Dental-Bearbeitungsmaschine (1) und Aufzeichnen der Ausführungs-Status der Vielzahl von Bearbeitungsprogrammen (CP);
Auswählen wenigstens eines der Vielzahl von Bearbeitungsprogrammen (CP) aus den Bearbeitungsprogrammen (CP), die in der Einheit (121) für Speicherung von Bearbeitungsprogrammen gespeichert sind, oder den Bearbeitungsprogrammen (CP), die in der Auftragsliste (JL) enthalten sind;
Einfügen des wenigstens einen ausgewählten Bearbeitungsprogramms (CP) an einer beliebigen anderen Position in der Auftragsliste (JL) als derjenigen eines der Bearbeitungsprogramme (CP), das aktuell von der Dental-Bearbeitungsmaschine (1) ausgeführt wird,
Speichern der von der Vorrichtung (11) zum Betreiben gesendeten Bearbeitungsprogramme (CP1), die die gleichen sind wie die in der Einheit (121) für Speicherung von Bearbeitungsprogrammen gespeicherten Bearbeitungsprogramme (CP), in der Dental-Bearbeitungsmaschine (1) und Speichern einer Auftragsliste (JL1), die die Reihenfolge der von der Dental-Bearbeitungsmaschine (1) auszuführenden Bearbeitungsprogramme vorgibt, in der Dental-Bearbeitungsmaschine (1),
Ausführen der Bearbeitungsprogramme sequenziell entsprechend der in der Dental-Bearbeitungsmaschine (1) gespeicherten Auftragsliste (JL1) durch die Dental-Bearbeitungsmaschine (1), und
Veranlassen, dass die Dental-Bearbeitungsmaschine (1) die in der Dental-Bearbeitungsmaschine (1) gespeicherte Auftragsliste (JL1) so revidiert, dass sie der in der Vorrichtung (11) zum Betreiben gespeicherten Auftragsliste (JL) nach dem Vorgang zum Einfügen entspricht, durch die Vorrichtung (11) zum Betreiben, wobei das Revidieren der in der Dental-Bearbeitungsmaschine (1) gespeicherten Auftragsliste (JL1) durchgeführt wird, indem die Auftragsliste (JL1) an der Dental-Bearbeitungsmaschine (1) zu dem Zeitpunkt gelöscht wird, zu dem das aktuell ausgeführte Bearbeitungsprogramm (CP) abgeschlossen worden ist, die Bearbeitungsprogramme (CP) auf Basis der Auftragsliste (JL) an der Vorrichtung (11) zum Betreiben mit dem eingefügten ausgewählten Bearbeitungsprogramm sequenziell zu der Dental-Bearbeitungsmaschine gesendet werden und eine revidierte Auftragsliste (JL1) in der Dental-Bearbeitungsmaschine (1) erstellt wird, wobei der Status jedes Bearbeitungsprogramms (CP) mit demjenigen in der Auftragsliste (JL) an der Vorrichtung (11) zum Betreiben in Übereinstimmung gebracht wird.

14. Verfahren zum Betreiben einer Dental-Bearbeitungsmaschine (1), mit dem eine Dental-Bearbeitungsmaschine betrieben wird, wobei das Verfahren die folgenden Schritte umfasst:
Speichern einer Vielzahl von Bearbeitungsprogrammen (CP), die jeweils einen von der Dental-Bearbeitungsmaschine (1) durchgeführten Bearbeitungsvorgang vorgeben, in einer Einheit (121) für Speicherung von Bearbeitungsprogrammen einer Vorrichtung (11) zum Betreiben;
Speichern einer Auftragsliste (JL), in der die Vielzahl von Bearbeitungsprogrammen (CP), die jeweils einen von der Dental-Bearbeitungsmaschine (1) durchgeführten Bearbeitungsvorgang definieren, mit einer Reihenfolge verknüpft sind, in der die Vielzahl von Bearbeitungsprogrammen (CP) auszuführen sind, in der Vorrichtung (11) zum Betreiben; und
wechselseitiges Übertragen von Daten zwischen der Vorrichtung (11) zum Betreiben und der Dental-Bearbeitungsmaschine (1);
**dadurch gekennzeichnet, dass** es des Weiteren die folgenden Schritte umfasst:
Beziehen von Ausführungs-Status der in der Auftragsliste (JL) enthaltenen Vielzahl von Bearbeitungsprogrammen (CP) von der Dental-Bearbeitungsmaschinen (1) und Aufzeichnen der Ausführungs-Status der Vielzahl von Bearbeitungsprogrammen (CP);
Auswählen wenigstens eines der Vielzahl von Bearbeitungsprogrammen (CP) aus den Bearbeitungsprogrammen (CP), die in der Einheit (121) für Speicherung von Bearbeitungsprogrammen gespeichert sind, oder den Bearbeitungsprogrammen (CP), die in der Auftragsliste (JL) enthalten sind;
Einfügen des wenigstens einen ausgewählten Bearbeitungsprogramms (CP) in die Auftragsliste (JL) unmittelbar nach einem der Bearbeitungsprogramme (CP), das aktuell von der Dental-Bearbeitungsmaschine (1) ausgeführt wird,
Speichern der von der Vorrichtung (11) zum Betreiben gesendeten Bearbeitungsprogramme (CP1), die die gleichen sind wie die in der Einheit (121) für Speicherung von Bearbeitungsprogrammen gespeicherten Bearbeitungsprogramme (CP), in der Dental-Bearbeitungsmaschine (1), und Speichern einer Auftragsliste (JL1), die die Reihenfolge der von der Dental-Bearbeitungsmaschine (1) auszuführenden Bearbeitungsprogramme vorgibt, in der Dental-Bearbeitungsmaschine (1),
Ausführen der Bearbeitungsprogramme sequenziell entsprechend der in der Dental-Bearbeitungsmaschine (1) gespeicherten Auftragsliste (JL1) durch die Dental-Bearbeitungsmaschine (1), und
Veranlassen, dass die Dental-Bearbeitungsmaschine (1) die in der Dental-Bearbeitungsmaschine (1) gespeicherte Auftragsliste (JL1) so revidiert, dass sie der in der Vorrichtung (11) zum Betreiben gespeicherten Auftragsliste (JL) nach dem Vorgang zum Einfügen entspricht, durch die Vorrichtung (11) zum Betreiben, wobei das Revidieren der in der Dental-Bearbeitungsmaschine (1) gespeicherten Auftragsliste (JL1) zu dem Zeitpunkt durchgeführt wird, zu dem das eine der Bearbeitungsprogramme (CP), das aktuell von der Dental-Bearbeitungsmaschine (1) ausgeführt wird, abgeschlossen ist, indem die Bearbeitungsprogramme (CP), die in der Auftragsliste (JL1) auf das eine der Verarbeitungsprogramme (CP) folgen, an die jeweilige nächste Position verschoben werden und das ausgewählte Bearbeitungsprogramm (CP) an der unmittelbar auf die des einen Programms folgenden Position eingefügt wird.

## Revendications

1. Dispositif d'actionnement de machine de traitement dentaire (11) pour actionner une machine de traitement dentaire (1), le dispositif d'actionnement (11) comprenant :
une unité de stockage de programmes de traitement (121) pour stocker une pluralité de programmes de traitement (CP) qui spécifient chacun une procédure de traitement mise en œuvre par la machine de traitement dentaire (1) ;
une première unité de stockage de listes (122) pour stocker une liste de tâches (JL) dans laquelle les programmes de la pluralité de programmes de traitement (CP), qui définissent chacun une procédure de traitement mise en œuvre par la machine de traitement dentaire (1), sont associés à un ordre dans lequel les programmes de la pluralité de programmes de traitement (CP) doivent être exécutés ; et
une première unité de communication (129) pour communiquer mutuellement des données entre le dispositif d'actionnement (11) et la machine de traitement dentaire (1) ;
**caractérisé par**
une première unité d'enregistrement d'états (123) pour acquérir, auprès de la machine de traitement dentaire (1), les états d'exécution de la pluralité de programmes de traitement (CP) contenus dans la liste de tâches (JL), et enregistrer les états d'exécution de la pluralité de programmes de traitement (CP) ;
une première unité de sélection (124) pour sélectionner au moins un programme de la pluralité de programmes de traitement (CP) parmi les programmes de traitement (CP) stockés dans l'unité de stockage de programmes de traitement (121) ou les programmes de traitement (CP) contenus dans la liste des tâches (JL) ; et
une première unité de traitement d'interposition (125) pour interposer ledit au moins un programme de traitement (CP) sélectionné par la première unité de sélection (124) dans la liste de tâches (JL) immédiatement après l'un des programmes de traitement (CP) actuellement en cours d'exécution par la machine de traitement dentaire (1), et en ce que
la machine de traitement dentaire (1) est configurée pour stocker les programmes de traitement (CP1) envoyés depuis le dispositif d'actionnement (11) qui sont les mêmes que les programmes de traitement (CP) stockés dans l'unité de stockage de programmes de traitement (121), et pour stocker une liste de tâches (JL1) qui spécifie l'ordre des programmes de traitement à exécuter par la machine de traitement dentaire (1),
la machine de traitement dentaire (1) est configurée pour exécuter les programmes de traitement séquentiellement selon la liste de tâches (JL1) qui y est stockée, et
le dispositif d'actionnement (11) est configuré pour amener la machine de traitement dentaire (1) à réviser la liste de tâches (JL1) stockée dans la machine de traitement dentaire (1) de manière à ce qu'elle corresponde à la liste de tâches (JL) stockée dans la première unité de stockage de listes (122) après l'opération d'interposition par la première unité de traitement d'interposition (125), dans lequel la révision de la liste de tâches (JL1) stockée sur la machine de traitement dentaire (1) est mise en œuvre en effaçant une fois la liste de tâches (JL1) sur la machine de traitement dentaire (1), puis en transmettant séquentiellement l'information de chacun des programmes de traitement (CP) enregistrés dans la liste de tâches (JL) sur le dispositif d'actionnement (11) et en établissant à Fin l'état des programmes de traitement (CP) jusqu'audit un des programmes de traitement qui était actuellement en cours d'exécution, celui-ci y compris, ce qui crée une liste de tâches révisée (JL1) sur la machine de traitement dentaire (1) conformément à la liste de tâches (JL) sur le dispositif d'actionnement (11), dans lequel l'état des programmes de traitement (CP) jusqu'audit programme qui était actuellement en cours d'exécution, celui-ci y compris, est établi à l'état Fin, le programme de traitement sélectionné est interposé, et les programmes de traitement suivants sont déplacés d'une position vers le haut dans la liste de tâches révisée (JL1).

2. Dispositif d'actionnement de machine de traitement dentaire (11) pour actionner une machine de traitement dentaire (1), le dispositif d'actionnement (11) comprenant :
une unité de stockage de programmes de traitement (121) pour stocker une pluralité de programmes de traitement (CP) qui spécifient chacun une procédure de traitement mise en œuvre par la machine de traitement dentaire (1) ;
une première unité de stockage de listes (122) pour stocker une liste de tâches (JL) dans laquelle les programmes de la pluralité de programmes de traitement (CP), qui définissent chacun une procédure de traitement mise en œuvre par la machine de traitement dentaire (1), sont associés à un ordre dans lequel les programmes de la pluralité de programmes de traitement (CP) doivent être exécutés ; et
une première unité de communication (129) pour communiquer mutuellement des données entre le dispositif d'actionnement (11) et la machine de traitement dentaire (1) ;
**caractérisé par**
une première unité d'enregistrement d'états (123) pour acquérir, auprès de la machine de traitement dentaire (1), les états d'exécution de la pluralité de programmes de traitement (CP) contenus dans la liste de tâches (JL), et enregistrer les états d'exécution de la pluralité de programmes de traitement (CP) ;
une première unité de sélection (124) pour sélectionner au moins un programme de la pluralité de programmes de traitement (CP) parmi les programmes de traitement (CP) stockés dans l'unité de stockage de programmes de traitement (121) ou les programmes de traitement (CP) contenus dans la liste des tâches (JL) ; et
une deuxième unité de traitement d'interposition (126) pour interposer ledit au moins un programme de traitement (CP) sélectionné par la première unité de sélection (124) à une position arbitraire dans la liste de tâches (JL) autre que l'un des programmes de traitement (CP) actuellement en cours d'exécution par la machine de traitement dentaire (1), et en ce que
la machine de traitement dentaire (1) est configurée pour stocker les programmes de traitement (CP1) envoyés depuis le dispositif d'actionnement (11) qui sont les mêmes que les programmes de traitement (CP) stockés dans l'unité de stockage de programmes de traitement (121), et pour stocker une liste de tâches (JL1) qui spécifie l'ordre des programmes de traitement à exécuter par la machine de traitement dentaire (1),
la machine de traitement dentaire (1) est configurée pour exécuter les programmes de traitement séquentiellement selon la liste de tâches (JL1) qui y est stockée, et
le dispositif d'actionnement (11) est configuré pour amener la machine de traitement dentaire (1) à réviser la liste de tâches (JL1) stockée dans la machine de traitement dentaire (1) de manière à ce qu'elle corresponde à la liste de tâches (JL) stockée dans la première unité de stockage de listes (122) après l'opération d'interposition par la deuxième unité de traitement d'interposition (126), dans lequel la révision de la liste de tâches (JL1) stockée dans la machine de traitement dentaire (1) est mise en œuvre en effaçant la liste de tâches (JL1) sur la machine de traitement dentaire (1) au moment où le programme de traitement (CP) actuellement en cours d'exécution est terminé, en envoyant séquentiellement les programmes de traitement (CP) à la machine de traitement dentaire (1), sur la base de la liste de tâches (JL) sur le dispositif d'actionnement (11), le programme de traitement sélectionné étant interposé, et en créant une liste de tâches révisée (JL1) sur la machine de traitement dentaire (1), dans lequel l'état de chaque programme de traitement (CP) est mis en conformité avec celui indiqué dans la liste de tâches (JL) sur le dispositif d'actionnement (11).

3. Dispositif d'actionnement de machine de traitement dentaire (11) pour actionner une machine de traitement dentaire (1), le dispositif d'actionnement (11) comprenant :
une unité de stockage de programmes de traitement (121) pour stocker une pluralité de programmes de traitement (CP) qui spécifient chacun une procédure de traitement mise en œuvre par la machine de traitement dentaire (1) ;
une première unité de stockage de listes (122) pour stocker une liste de tâches (JL) dans laquelle les programmes de la pluralité de programmes de traitement (CP), qui définissent chacun une procédure de traitement mise en œuvre par la machine de traitement dentaire (1), sont associés à un ordre dans lequel les programmes de la pluralité de programmes de traitement (CP) doivent être exécutés ; et
une première unité de communication (129) pour communiquer mutuellement des données entre le dispositif d'actionnement (11) et la machine de traitement dentaire (1) ;
**caractérisé par**
une première unité d'enregistrement d'états (123) pour acquérir, auprès de la machine de traitement dentaire (1), les états d'exécution de la pluralité de programmes de traitement (CP) contenus dans la liste de tâches (JL), et enregistrer les états d'exécution de la pluralité de programmes de traitement (CP) ;
une première unité de sélection (124) pour sélectionner au moins un programme de la pluralité de programmes de traitement (CP) parmi les programmes de traitement (CP) stockés dans l'unité de stockage de programmes de traitement (121) ou les programmes de traitement (CP) contenus dans la liste des tâches (JL) ; et
une première unité de traitement d'interposition (125) pour interposer ledit au moins un programme de traitement (CP) sélectionné par la première unité de sélection (124) dans la liste de tâches (JL) immédiatement après l'un des programmes de traitement (CP) actuellement en cours d'exécution par la machine de traitement dentaire (1), et en ce que
la machine de traitement dentaire (1) est configurée pour stocker les programmes de traitement (CP1) envoyés depuis le dispositif d'actionnement (11) qui sont les mêmes que les programmes de traitement (CP) stockés dans l'unité de stockage de programmes de traitement (121), et pour stocker une liste de tâches (JL1) qui spécifie l'ordre des programmes de traitement à exécuter par la machine de traitement dentaire (1),
la machine de traitement dentaire (1) est configurée pour exécuter les programmes de traitement séquentiellement selon la liste de tâches (JL1) qui y est stockée, et
le dispositif d'actionnement (11) est configuré pour amener la machine de traitement dentaire (1) à réviser la liste de tâches (JL1) stockée dans la machine de traitement dentaire (1) de manière à ce qu'elle corresponde à la liste de tâches (JL) stockée dans la première unité de stockage de listes (122) après l'opération d'interposition par la première unité de traitement d'interposition (125), dans lequel la révision de la liste de tâches (JL1) stockée dans la machine de traitement dentaire (1) est mise en œuvre au moment où ledit un des programmes de traitement (CP) actuellement en cours d'exécution par la machine de traitement dentaire (1) est terminé, en déplaçant les programmes de traitement (CP) suivants dans la liste de tâches (JL1) après ledit un des programmes de traitement (CP) à la position suivante respective et en interposant le programme de traitement sélectionné (CP) à la position suivant immédiatement celle dudit un programme.

4. Dispositif d'actionnement de machine de traitement dentaire (11) selon la revendication 2, comprenant en outre une première unité de traitement d'affichage (127) pour amener un dispositif d'affichage à afficher un écran de traitement qui affiche une pluralité de programmes de traitement (CP) contenus dans la liste de tâches (JL) et permet à un opérateur d'établir une position dans l'ordre à laquelle ledit au moins un des programmes de traitement (CP) sélectionné par la première unité de sélection (124) est interposé.

5. Dispositif d'actionnement de machine de traitement dentaire (11) selon l'une quelconque des revendications 1 à 4, comprenant en outre une première unité de traitement de mise à jour (128) pour acquérir le dernier état de la machine de traitement dentaire (1).

6. Système d'actionnement de machine de traitement dentaire (10), comprenant :
un dispositif d'actionnement (11) selon l'une quelconque des revendications 1 à 5 ;
une machine de traitement dentaire (1), mutuellement connectée en communication de données avec le dispositif d'actionnement (11) ;
un serveur (12), connecté en communication de données avec le dispositif d'actionnement (11),
le serveur (12) comprenant :
une deuxième unité de stockage de listes (141) pour stocker la liste de tâches (JL) acquise auprès du dispositif d'actionnement (11) ; et
une deuxième unité de gestion d'états (142) pour acquérir des états d'exécution d'une pluralité de programmes de traitement (CP) contenus dans la liste de tâches (JL) par l'intermédiaire du dispositif d'actionnement (11) et enregistrer les états d'exécution de la pluralité de programmes de traitement (CP).

7. Système d'actionnement de machine de traitement dentaire (10) selon la revendication 6, comprenant en outre une deuxième unité de traitement de mise à jour (143) pour acquérir le dernier état de la machine de traitement dentaire (1) par l'intermédiaire du dispositif d'actionnement (11).

8. Système d'actionnement de machine de traitement dentaire (10) selon la revendication 7, comprenant en outre :
un dispositif externe (13), connecté en communication de données avec le serveur (12), et dans lequel
le dispositif externe (13) comprend :
une troisième unité de stockage de listes (161) pour stocker la liste de tâches (JL) acquise auprès du serveur (12) ;
une troisième unité de gestion d'états (162) pour acquérir des états d'exécution d'une pluralité de programmes de traitement (CP) contenus dans la liste de tâches (JL) par l'intermédiaire du serveur (12) et enregistrer les états d'exécution de la pluralité de programmes de traitement (CP) ;
une deuxième unité de sélection (163) pour sélectionner au moins un programme de la pluralité de programmes de traitement (CP) parmi les programmes de traitement (CP) stockés dans l'unité de stockage de programmes de traitement (121) ou les programmes de traitement contenus dans la liste des tâches (JL) ; et
une troisième unité de traitement d'interposition (164) pour interposer ledit au moins un programme de traitement (CP) sélectionné par la deuxième unité de sélection (163) dans la liste de tâches (JL) immédiatement après l'un des programmes de traitement (CP) actuellement en cours d'exécution par la machine de traitement dentaire (1).

9. Système d'actionnement de machine de traitement dentaire (10) selon la revendication 7, comprenant en outre :
un dispositif externe (13), connecté en communication de données avec le serveur (12), et dans lequel
le dispositif externe (13) comprend :
une troisième unité de stockage de listes (161) pour stocker la liste de tâches (JL) acquise auprès du serveur (12) ;
une troisième unité de gestion d'états (162) pour acquérir des états d'exécution d'une pluralité de programmes de traitement (CP) contenus dans la liste de tâches (JL) par l'intermédiaire du serveur (12) et enregistrer les états d'exécution de la pluralité de programmes de traitement (CP) ;
une deuxième unité de sélection (163) pour sélectionner au moins un programme de la pluralité de programmes de traitement (CP) parmi les programmes de traitement (CP) qui sont stockés dans l'unité de stockage de programmes de traitement (121) ou les programmes de traitement (CP) qui sont contenus dans la liste des tâches (JL) ; et
une quatrième unité de traitement d'interposition (166) pour interposer ledit au moins un programme de traitement (CP) sélectionné par la deuxième unité de sélection (163) à une position arbitraire dans la liste de tâches (JL) autre que l'un des programmes de traitement (CP) actuellement en cours d'exécution par la machine de traitement dentaire (1).

10. Système d'actionnement de machine de traitement dentaire (10) selon la revendication 9, comprenant en outre une deuxième unité de traitement d'affichage (167) pour amener un dispositif d'affichage à afficher un écran de traitement qui affiche une pluralité de programmes de traitement (CP) contenus dans la liste de tâches (JL) et permet à un opérateur d'établir une position dans l'ordre où ledit au moins un des programmes de traitement (CP) sélectionné par la deuxième unité de sélection (163) est interposé.

11. Système d'actionnement de machine de traitement dentaire (10) selon l'une quelconque des revendications 8 à 10, comprenant en outre une troisième unité de traitement de mise à jour (168) pour acquérir le dernier état de la machine de traitement dentaire (1) par l'intermédiaire du serveur (12) .

12. Procédé d'actionnement de machine de traitement dentaire pour actionner une machine de traitement dentaire (1), le procédé d'actionnement comprenant les étapes suivantes :
stockage, dans une unité de stockage de programmes de traitement (121) d'un dispositif d'actionnement (11), d'une pluralité de programmes de traitement (CP) spécifiant chacun une procédure de traitement mise en œuvre par la machine de traitement dentaire (1) ;
stockage, dans le dispositif d'actionnement (11), d'une liste de tâches (JL) dans laquelle les programmes de la pluralité de programmes de traitement (CP), qui définissent chacun une procédure de traitement mise en œuvre par la machine de traitement dentaire (1), sont associés à un ordre dans lequel les programmes de la pluralité de programmes de traitement (CP) doivent être exécutés ; et
communication mutuelle de données entre le dispositif d'actionnement (11) et la machine de traitement dentaire (1) ;
**caractérisé en ce qu'**il comprend en outre les étapes suivantes
d'acquisition, auprès de la machine de traitement dentaire (1), d'états d'exécution de la pluralité de programmes de traitement (CP) contenus dans la liste de tâches (JL), et d'enregistrement des états d'exécution de la pluralité de programmes de traitement (CP) ;
de sélection d'au moins un programme de la pluralité de programmes de traitement (CP) parmi les programmes de traitement (CP) stockés dans l'unité de stockage de programmes de traitement (121) ou les programmes de traitement (CP) contenus dans la liste de tâches (JL) ;
d'interposition dudit au moins un programme de traitement sélectionné (CP) dans la liste de tâches (JL) immédiatement après l'un des programmes de traitement (CP) actuellement en cours d'exécution par la machine de traitement dentaire (1),
de stockage, dans la machine de traitement dentaire (1), des programmes de traitement (CP1) envoyés par le dispositif d'actionnement (11) qui sont les mêmes que les programmes de traitement (CP) stockés dans l'unité de stockage de programmes de traitement (121), et de stockage, dans la machine de traitement dentaire (1), d'une liste de tâches (JL1) qui spécifie l'ordre des programmes de traitement à exécuter par la machine de traitement dentaire (1),
la machine de traitement dentaire (1) exécutant les programmes de traitement séquentiellement conformément à la liste de tâches (JL1) stockée dans la machine de traitement dentaire (1), et
le dispositif d'actionnement (11) amenant la machine de traitement dentaire (1) à réviser la liste de tâches (JL1) stockée dans la machine de traitement dentaire (1) de manière à ce qu'elle corresponde à la liste de tâches (JL) stockée dans le dispositif d'actionnement (11) après l'opération d'interposition, dans lequel la révision de la liste de tâches (JL1) stockée sur la machine de traitement dentaire (1) est mise en œuvre en effaçant une fois la liste de tâches (JL1) sur la machine de traitement dentaire (1), puis en transmettant séquentiellement l'information de chacun des programmes de traitement (CP) enregistrés dans la liste de tâches (JL) sur le dispositif d'actionnement (11) et en établissant à Fin l'état des programmes de traitement (CP) jusqu'audit un des programmes de traitement qui était actuellement en cours d'exécution, celui-ci y compris, ce qui crée une liste de tâches révisée (JL1) sur la machine de traitement dentaire (1) conformément à la liste de tâches (JL) sur le dispositif d'actionnement (11), dans lequel l'état des programmes de traitement (CP) jusqu'audit programme qui était actuellement en cours d'exécution, celui-ci y compris, est établi à l'état Fin, le programme de traitement sélectionné est interposé, et les programmes de traitement suivants sont déplacés d'une position vers le haut dans la liste de tâches révisée (JL1).

13. Procédé d'actionnement de machine de traitement dentaire pour actionner une machine de traitement dentaire (1), le procédé d'actionnement comprenant les étapes suivantes :
stockage, dans une unité de stockage de programmes de traitement (121) d'un dispositif d'actionnement (11), d'une pluralité de programmes de traitement (CP) spécifiant chacun une procédure de traitement mise en œuvre par la machine de traitement dentaire (1) ;
stockage, dans le dispositif d'actionnement (11), d'une liste de tâches (JL) dans laquelle les programmes de la pluralité de programmes de traitement (CP), qui définissent chacun une procédure de traitement mise en œuvre par la machine de traitement dentaire (1), sont associés à un ordre dans lequel les programmes de la pluralité de programmes de traitement (CP) doivent être exécutés ; et
communication mutuelle de données entre le dispositif d'actionnement (11) et la machine de traitement dentaire (1) ;
**caractérisé en ce qu'**il comprend en outre les étapes suivantes
d'acquisition, auprès de la machine de traitement dentaire (1), d'états d'exécution de la pluralité de programmes de traitement (CP) contenus dans la liste de tâches (JL), et d'enregistrement des états d'exécution de la pluralité de programmes de traitement (CP) ;
de sélection d'au moins un programme de la pluralité de programmes de traitement (CP) parmi les programmes de traitement (CP) stockés dans l'unité de stockage de programmes de traitement (121) ou les programmes de traitement (CP) contenus dans la liste de tâches (JL) ;
d'interposition dudit au moins un programme de traitement sélectionné (CP) à une position arbitraire dans la liste de tâches (JL) autre que ledit un des programmes de traitement (CP) actuellement en cours d'exécution par la machine de traitement dentaire (1),
de stockage, dans la machine de traitement dentaire (1), des programmes de traitement (CP1) envoyés par le dispositif d'actionnement (11) qui sont les mêmes que les programmes de traitement (CP) stockés dans l'unité de stockage de programmes de traitement (121), et de stockage, dans la machine de traitement dentaire (1), d'une liste de tâches (JL1) qui spécifie l'ordre des programmes de traitement à exécuter par la machine de traitement dentaire (1),
la machine de traitement dentaire (1) exécutant les programmes de traitement séquentiellement conformément à la liste de tâches (JL1) stockée dans la machine de traitement dentaire (1), et
le dispositif d'actionnement (11) amenant la machine de traitement dentaire (1) à réviser la liste de tâches (JL1) stockée dans la machine de traitement dentaire (1) de manière à ce qu'elle corresponde à la liste de tâches (JL) stockée dans le dispositif d'actionnement (11) après l'opération d'interposition, dans lequel la révision de la liste de tâches (JL1) stockée dans la machine de traitement dentaire (1) est mise en œuvre en effaçant la liste de tâches (JL1) sur la machine de traitement dentaire (1) au moment où le programme de traitement (CP) actuellement en cours d'exécution est terminé, en envoyant séquentiellement les programmes de traitement (CP) à la machine de traitement dentaire (1), sur la base de la liste de tâches (JL) sur le dispositif d'actionnement (11), le programme de traitement sélectionné étant interposé, et en créant une liste de tâches révisée (JL1) sur la machine de traitement dentaire (1), dans lequel l'état de chaque programme de traitement (CP) est mis en conformité avec celui indiqué dans la liste de tâches (JL) sur le dispositif d'actionnement (11).

14. Procédé d'actionnement de machine de traitement dentaire pour actionner une machine de traitement dentaire (1), le procédé d'actionnement comprenant les étapes suivantes :
stockage, dans une unité de stockage de programmes de traitement (121) d'un dispositif d'actionnement (11), d'une pluralité de programmes de traitement (CP) spécifiant chacun une procédure de traitement mise en œuvre par la machine de traitement dentaire (1) ;
stockage, dans le dispositif d'actionnement (11), d'une liste de tâches (JL) dans laquelle les programmes de la pluralité de programmes de traitement (CP), qui définissent chacun une procédure de traitement mise en œuvre par la machine de traitement dentaire (1), sont associés à un ordre dans lequel les programmes de la pluralité de programmes de traitement (CP) doivent être exécutés ; et
communication mutuelle de données entre le dispositif d'actionnement (11) et la machine de traitement dentaire (1) ;
**caractérisé en ce qu'**il comprend en outre les étapes suivantes
d'acquisition, auprès de la machine de traitement dentaire (1), d'états d'exécution de la pluralité de programmes de traitement (CP) contenus dans la liste de tâches (JL), et d'enregistrement des états d'exécution de la pluralité de programmes de traitement (CP) ;
de sélection d'au moins un programme de la pluralité de programmes de traitement (CP) parmi les programmes de traitement (CP) stockés dans l'unité de stockage de programmes de traitement (121) ou les programmes de traitement (CP) contenus dans la liste de tâches (JL) ;
d'interposition dudit au moins un programme de traitement sélectionné (CP) dans la liste de tâches (JL) immédiatement après l'un des programmes de traitement (CP) actuellement en cours d'exécution par la machine de traitement dentaire (1),
de stockage, dans la machine de traitement dentaire (1), des programmes de traitement (CP1) envoyés par le dispositif d'actionnement (11) qui sont les mêmes que les programmes de traitement (CP) stockés dans l'unité de stockage de programmes de traitement (121), et de stockage, dans la machine de traitement dentaire (1), d'une liste de tâches (JL1) qui spécifie l'ordre des programmes de traitement à exécuter par la machine de traitement dentaire (1),
la machine de traitement dentaire (1) exécutant les programmes de traitement séquentiellement conformément à la liste de tâches (JL1) stockée dans la machine de traitement dentaire (1), et
le dispositif d'actionnement (11) amenant la machine de traitement dentaire (1) à réviser la liste de tâches (JL1) stockée dans la machine de traitement dentaire (1) de manière à ce qu'elle corresponde à la liste de tâches (JL) stockée dans le dispositif d'actionnement (11) après l'opération d'interposition, dans lequel la révision de la liste de tâches (JL1) stockée dans la machine de traitement dentaire (1) est mise en œuvre au moment où ledit un des programmes de traitement (CP) actuellement en cours d'exécution par la machine de traitement dentaire (1) est terminé, en déplaçant les programmes de traitement (CP) suivants dans la liste de tâches (JL1) après ledit un des programmes de traitement (CP) à la position suivante respective et en interposant le programme de traitement sélectionné (CP) à la position suivant immédiatement celle dudit un programme.
